# EUROPÄISCHE PATENTANMELDUNG

(11) **EP 3 694 156 A1**
(43) Veröffentlichungstag der Anmeldung: **12.08.2020**
(21) Anmeldenummer: 19155923.6
(22) Anmeldetag: 07.02.2019
(51) Int. Cl.: H04L 12/42

(54) **VERFAHREN ZUR AUSFALLSICHEREN DATENÜBERTRAGUNG, NETZWERKKNOTEN, COMPUTERPROGRAMM UND COMPUTERLESBARES MEDIUM**

(71) Anmelder: Siemens Aktiengesellschaft, 80333 München (DE)
(72) Erfinder: Chen, Feng, 90537 Feucht (DE); Götz, Franz-Josef, 91180 Heideck (DE); Kießling, Marcel, 91235 Velden (DE); Nguyen, An Ninh, 90427 Nürnberg (DE); Schmitt, Jürgen, 90766 Fürth (DE)

(57) **Zusammenfassung**

Die Erfindung betrifft ein Verfahren zur ausfallsicheren Datenübertragung in einem Netzwerk mit einem Ringsegment (2, 11, 12), wobei zur Einrichtung eines Streams zwischen einem Stream-Initiator (T) und einem Stream-Teilnehmer (L) von dem Stream-Initiator (T) eine Ankündigungsnachricht (7) für den Stream herausgegeben wird, die Ankündigungsnachricht (7) das Ringsegment (2, 11, 12) an einem nicht an dem Ringsegment (2, 11, 12) teilnehmenden Ports (5) eines den Einspeise-Ringknoten (R1, R4, RIV) für diese Ankündigungsnachricht (7) darstellenden Ringknotens (R1-R11, RI-RIV) erreicht, und der Einspeise-Ringknoten (R1, R4, RIV) die Ankündigungsnachricht (7) über wenigstens einen an dem Ringsegment (2, 11, 12) teilnehmenden Ringport (3, 4) weiterleitet, wobei für jeden oder von jedem Ringknoten (R1-R11, RI-RIV) des Ringsegmentes (2, 11, 12), der eine Ankündigungsnachricht (7) an einem Ringport (3, 4) empfängt, vor deren Weiterleitung über seinen anderen Ringport (3, 4) überprüft wird, ob er der Einspeise-Ringknoten (R1, R4, RIV) des Ringsegmentes (2, 11, 12) für diese Ankündigungsnachricht (7) war, und die Ankündigungsnachricht (7) nur über den anderen Ringport (3, 4) weitergeleitet wird, wenn dies nicht der Fall ist. Darüber hinaus betrifft die Erfindung einen Netzwerkknoten (R1-R11, RI-RIV), ein Computerprogramm und ein computerlesbares Medium.

## Beschreibung

Die Erfindung betrifft ein Verfahren zur ausfallsicheren Datenübertragung in einem bevorzugt industriellen Netzwerk mit einem oder mehreren Ringsegmenten, in dem oder in denen jeweils mehrere Ringknoten unter Bildung eines Ringes miteinander verbunden sind, wobei jeder Ringknoten genau zwei an dem oder dem jeweiligen Ringsegment teilnehmende und als solche bekannte Ringports und optional einen oder mehrere nicht an dem oder dem jeweiligen Ringsegment teilnehmende Ports aufweist. Darüber hinaus betrifft die Erfindung einen Netzwerk-knoten, ein Computerprogramm und ein computerlesbares Medium.

In Industrienetzwerken erfolgt der Austausch von Sensor/Aktor-Informationen mit der Steuerung in der Regel digitalisiert über ein Kommunikationsnetzwerk. Ein Feldbus ist ein Bussystem, das in einer Anlage Feldgeräte wie Messfühler (Sensoren) und Stellglieder (Aktoren) zwecks Kommunikation mit einem Automatisierungsgerät verbindet. Wenn mehrere Kommunikationsteilnehmer ihre Nachrichten über dieselbe Leitung senden, dann muss festgelegt sein, wer (Kennung) was (Messwert, Befehl) wann (Initiative) sagt. Hierfür gibt es normierte Protokolle. Als Technologie hat sich Ethernet durchgesetzt.

Der Feldbus ersetzt die parallelen Leitungsbündel durch ein einziges Buskabel und verbindet in der Regel alle Ebenen, von der Feld- bis zur Leitebene. Unabhängig von der Art des Automatisierungsgeräts, etwa speicherprogrammierbarer Steuerung (SPS), unterschiedlicher Hersteller oder PC-basierte Steuerungen, vernetzt das Übertragungsmedium des Feldbusses die Komponenten im Feld.

In der Industrie wurde bisher eine eigene Feldbus-Technologie ausgearbeitet. Die neuen echtzeitfähigen Ethernet-basierten Feldbusse sind beispielsweise in der Norm IEC 61784-2 zusammengestellt. Bekannt ist PROFINET (Process Field Network), der offene Industrial-Ethernet-Standard der PROFIBUS-Nutzerorganisation e.V. (PNO) für die Automatisierung. PROFINET nutzt TCP/IP und IT-Standards, ist Echtzeit-Ethernet-fähig und ermöglicht die Integration von Feldbus-Systemen.

In PROFINET wurde für Echtzeitdaten in der Regel eine eigene Priorität verwendet, welche in einem Netzwerk ausschließlich für die Echtzeit-Daten zu verwenden ist. Damit eine Latenz garantiert werden kann, müssen die Echtzeit-Daten in der höchsten Priorität übertragen werden. Die exklusive Nutzung der höchsten Priorität ist dabei eine Aufbaurichtlinie und wird nicht weiter überwacht. Alle anderen Anwendungen können ebenfalls diese spezielle Priorität nutzen. Bei der Verwendung von mehreren PROFINET-Anwendungen in einem Netzwerk erfolgt keine Überprüfung der tatsächlich verwendeten Ressourcen. Jede Anwendung prüft nur, ob das Netzwerk bei exklusiver Benutzung ausreichend dimensioniert ist. Dabei wird insbesondere das Controller-Device-Modell zugrunde gelegt und die Kommunikationslast an der Steuerung, bei der es sich etwa um eine speicherprogrammierbare Steuerung handeln kann, überprüft. Durch die nur einfache Überprüfung kann es bei mehreren Anwendungen zu Überlastsituationen im Netzwerk kommen, welche eine falsche Verwendung des Echtzeitsystems darstellen und zum Kommunikationsausfall führen können. Der Anwender von PROFINET hat die Randbedingungen für den Einsatz sicherzustellen, damit das System im eingeschränkten Anwendungsfall funktioniert.

Da ein Kommunikationsausfall im industriellen Bereich, insbesondere in der industriellen Automatisierungstechnik ein erhebliches Problem darstellt, insbesondere bis zu einem Stillstand einer Maschine/Anlage bzw. eines Prozesses führen kann, wird eine Medienredundanz häufig vorausgesetzt. Durch die Medienredundanz kann der Kommunikationsausfall bei der Störung einer einzelnen Strecke (beispielsweise durch Beschädigung) kompensiert werden.

Eine bekannte Möglichkeit, Medienredundanz zu bieten, besteht darin, die typischen Netzstrukturen von Feldbussen - langen Linien - zu verwenden, und die Linien zu einem Ring zu schließen. Ein entsprechendes Netzwerk umfasst dann ein Ringsegment, in dem mehrere Ringknoten unter Bildung eines Ringes miteinander verbunden sind, wobei jeder Ringknoten genau zwei an dem Ringsegment teilnehmende Ringports und optional einen oder mehrere nicht an dem Ringsegment teilnehmende Ports (können auch als Nicht-Ringports bezeichnet werden) aufweist, oder wird durch ein solches gebildet. In den Ringteilnehmern wird lokal nur eine kleine Erweiterung eingefügt. In einem speziell vorgesehenen Gerät, dem so genannten Ringmanager, erfolgt die gezielte Öffnung des Ringes. Unter Öffnung ist dabei insbesondere zu verstehen, dass Datenpakete, die an einem an dem Ringsegment teilnehmenden Ringport eines Ringknotens, der insbesondere den Ringmanager darstellt oder diesen bzw. dessen Funktion umfasst, ankommen, nicht weitergeleitet werden. Die Funktion aller Einzelverbindungen wird durch Testtelegramme ständig vom Ringmanager geprüft. Im Falle einer fehlerhaften Verbindung bleiben die zyklischen Testtelegramme aus und der Ringmanager schließt den zuvor bei ihm geöffneten Ring, um die Kommunikation mit dem durch den Fehler entkoppelten Teil des Ringes wiederherzustellen.

Bei Topologie-Änderungen erfolgt durch die MRP-Erweiterung (MRP steht für das so genannte Media Redundancy Protocol, welches ein Protokoll für hoch verfügbare Netzwerke darstellt, siehe insbesondere IEC62439) ein Löschen der gelernten Richtungen im Ring in allen Ringteilnehmern. Durch die Überprüfung an einer einzigen Stelle bei MRP/HRP (HRP steht für das Highspeed Redundancy Protocol, bei welcher es sich um eine auf die Anmelderin zurückgehenden proprietären Variante von MRP handelt. HRP ist beispielsweise in der Veröffentlichung "Konfiguration von HRP-Ringen mit Standby-Kopplung" der Anmelderin beschrieben, die unter https://support.industry.siemens.com/cs/document/109739600/ko nfiguration-von-hrp-ringen-mit-standby-kopplung?dti=0&lc=de-AT erhältlich ist) wird die schnelle Weiterleitung der Testtelegramme im Ring ausgenutzt, um selbst große Ringe aufbauen zu können. In den Ringteilnehmern selbst ist nur eine kleine Erweiterung notwendig, die selbst in einfachsten Endgeräten mit integriertem Switch umgesetzt werden kann. Dadurch ist das Verfahren besser für industrielle Netzwerke mit langen Linien bzw. Ringen geeignet, als die standardisierten IEEE-Mechanismen. Die beiden an dem Ringsegment teilnehmenden Ringports jedes Ringknotens sind bekannt, insbesondere durch MRP definiert worden.

Zu Ring-Topologien und MRP sei auch auf die auf die Anmelderin zurückgehende Veröffentlichung mit dem Titel "Aufbau einer Ring-Topologie auf Basis "MRP" SCALANCE X, SIMATIC S7" verwiesen, die unter https://support.industry.siemens.com/cs/ww/de/view/109739614 erhältlich ist. Auch in dieser Veröffentlichung wird auf die Ringports eingegangen, deren Auswahl und Festlegung insbesondere auf Seite 16 beschrieben.

Bei Anwendungen, die nicht mit dem Ausfall einer Verbindung zurechtkommen, werden die Daten in der Regel auf mehreren, typischerweise zwei getrennten Übertragungswegen (Pfaden) parallel im Netzwerk übertragen. Dies wird oft als "Seamless Redundancy" bezeichnet, da es im Fehlerfall keinen Ausfall der Kommunikation gibt. Bekannt ist beispielsweise das als High-Availability Seamless Redundancy (HSR) bezeichnete Netzwerkprotokoll für Ethernet sowie das Parallel Redundancy Protocol (PRP), die beide in IEC 62439-3 standardisiert sind. Bei HSR und PRP wird eine Sequenznummer in alle Datenpakete eingefügt.

In der IEEE ist dieses Prinzip im Rahmen von IEEE802.1CB durch die TSN-Arbeitsgruppe standardisiert. In einer Verbindung wird ein zusätzliches TAG (Redundancy-TAG) mit einer Sequenznummer eingefügt. Dadurch können für besonders kritische Verbindungen Duplikate im Netzwerk übertragen und später gefiltert werden.

Seit der Einführung der Feldbustechnologie auf Ethernet hat sich Ethernet weiterentwickelt. In der AVB-Arbeitsgruppe (Audio Video Bridging Taskgroup) wurden Erweiterungen eingeführt, um spezielle periodische Verbindungen (so genannte Streams) im Netzwerk zu schützen. Ziel von AVB ist die geschützte Übertragung von Audio- und Videosignalen in einem Ethernet-Netzwerk. Dabei wird durch ein Reservierungsprotokoll (Stream Reservation Protocol, SRP, siehe insbesondere IEEE802.1Q) auf dem Übertragungsweg die Weiterleitung eingerichtet und alle benötigten Ressourcen werden für die Übertragung reserviert. In der Nachfolgegruppe, TSN (Time Sensitive Networking) wurden weitere Optimierungen und Ergänzungen eingefügt, um die Anforderungen von weiteren Anwendungsfällen abzudecken und damit Ethernet in weiteren Märkten einsetzen zu können. Zu TSN gehört eine Vielzahl von Standards. Rein beispielhaft sei in diesem Zusammenhang die Zeitsynchronisation (IEEE802.1AS-Rev), Frame Preemption (IEEE802.1Qbu) und Reservierung (IEEE802.1Qca, IEEE802.1Qcc) genannt.

Aus der ebenfalls auf die Anmelderin zurückgehenden WO 2019/001718 A1 geht ein Verfahren zur Reservierung von maximal redundanten Übertragungswegen für die Übertragung von Datenpaketen hervor. Offenbart ist, ein Reservierungsprotokoll so zu erweitern, dass eine automatische Konfiguration der Duplikatefilter von Seamless Redundancy an den benötigten Stellen im Netzwerk während der Ressourcenreservierung vorgenommen wird. Im Reservierungsprotokoll sind dazu bereits alle Informationen bekannt. Für die Stream-Einrichtung wird eine Stream-Ankündigungsnachricht in Form eines Talker Advertises entlang von zwei zuvor zu ermittelnden, also vorbestimmten maximal redundanten Wegen (Bäumen) im Netzwerk weitergeleitet.

Es ist eine Aufgabe der vorliegenden Erfindung, ein Verfahren zur ausfallsicheren Datenübertragung der eingangs genannten Art anzugeben, welches eine zuverlässige Datenübertragung unter Nutzung reservierter Ressourcen bei gleichzeitig hoher Ausfallsicherheit bietet und sich mit vergleichsweise geringem Aufwand durchführen lässt.

Diese Aufgabe wird bei einem Verfahren zur ausfallsicheren Datenübertragung der eingangs genannten Art dadurch gelöst, dass zur Einrichtung eines Streams zwischen einem Stream-Initiator und wenigstens einem Stream-Teilnehmer von dem Stream-Initiator eine Ankündigungsnachricht für den Stream herausgegeben und diese im Netzwerk verbreitet wird, und die Ankündigungsnachricht das oder das jeweilige Ringsegment an einem nicht an dem oder dem jeweiligen Ringsegment teilnehmenden Port eines den Einspeise-Ringknoten des oder des jeweiligen Ringsegmentes für diese Ankündigungsnachricht darstellenden Ringknotens erreicht, und der oder der jeweilige Einspeise-Ringknoten die Ankündigungsnachricht über wenigstens einen seiner beiden an dem oder dem jeweiligen Ringsegment teilnehmenden Ringports weiterleitet, und die Ankündigungsnachricht in dem oder dem jeweiligen Ringsegment in wenigstens eine Richtung von Ringknoten zu Ringknoten weitergeleitet und bevorzugt von den Ringknoten verarbeitet wird, wobei für jeden oder von jedem Ringknoten des oder des jeweiligen Ringsegmentes, der eine Ankündigungsnachricht an einem an dem oder dem jeweiligen Ringsegment teilnehmenden Ringport empfängt, vor deren Weiterleitung über seinen anderen an dem oder dem jeweiligen Ringsegment teilnehmenden Ringport überprüft wird, ob er der Einspeise-Ringknoten des oder des jeweiligen Ringsegmentes für diese Ankündigungsnachricht war, und die Ankündigungsnachricht nur über den anderen an dem oder dem jeweiligen Ringsegment teilnehmenden Ringport weitergeleitet wird, wenn dies nicht der Fall ist.

Der Grundgedanke der vorliegenden Erfindung besteht mit anderen Worten darin, die für industrielle Anwendungen optimierte, einfache Redundanzmechanismen auf Basis von Ring-Topologien mit der Ressourcenreservierung für eine geschützte Übertragung, insbesondere von einem Reservierungsprotokoll wie etwa SRP, zu kombinieren. Dabei wird erfindungsgemäß eine Stream-Ankündigungsnachricht, die beispielsweise in Form eines Talker oder Listener Advertises vorliegen kann, bei Eintritt in das bzw., sofern mehrere vorhanden sind, das jeweilig Ringsegment über den die Einspeiserrolle für das oder das jeweilige Segment übernehmenden Knoten verdoppelt bzw. vervielfacht und über dessen beide an dem (jeweiligen) Ringsegment teilnehmende Ringports in beide Richtungen weitergeleitet und "durchläuft" in beide Richtungen einmal vollständig das (jeweilige) Ringsegment. So wird es auf einfache Weise möglich, beide Richtungen bzw. Wege im Netzwerk mit Ringtopologie(en) zu reservieren. Dann stehen für die Übertragung im Fehlerfall, wenn von einem der beiden Wege auf den anderen gewechselt werden muss, genügend Ressourcen für eine Übertragung auch auf dem anderen, neuen Weg zur Verfügung und die Umschaltung kann lokal sofort ausgelöst werden.

Ist beispielsweise eine bestimmte Stelle in einem Ringsegment, insbesondere von einem Ringmanager, gezielt "geöffnet", damit nur einer von zwei über die Ringtopologie möglichen redundanten Wegen für die Datenübertragung genutzt wird, und wird ein Fehler auf dem aktuell genutzten Weg festgestellt, beispielsweise über ein Ausbleiben der von einem Ringmanager gesendeten Testtelegramme, kann auf den anderen Weg gewechselt werden, wo ebenfalls eine geschützte Übertragung unter Nutzung von an den beteiligten Netzwerkknoten reservierten Ressourcen möglich ist.

Die Stream-Einrichtung erfolgt dabei in an sich bekannter Weise, um im Anschluss an die Einrichtung, insbesondere, wenn sich wenigstens ein Stream-Teilnehmer an dem angekündigten Stream angemeldet hat, eine Übertragung von Datenpaketen unter Nutzung von an Netzwerk-knoten reservierten Ressourcen weitergeleitet werden können, wodurch insbesondere eine Latenz garantiert werden kann.

Damit eine Reservierung von Ressourcen, insbesondere auf die vorbekannte, standardgemäße Weise (z.B. gemäß SRP) auf zwei Pfaden in dem (jeweiligen) Ringsegment auf einfache Weise möglich ist, und gleichzeitig verhindert wird, dass die dafür in beide Richtungen verbreitete Stream-Ankündigungsnachricht endlos kreist, ist erfindungsgemäß eine zusätzliche, einfache Überprüfung vorgesehen. Konkret wird von jedem oder für jeden Ringnoten, der eine Ankündigungsnachricht an einem seiner beiden Ringports empfängt, zunächst überprüft, ob dieser der Einspeise-Ringknoten des (jeweiligen) Ringsegmentes für die Ankündigungsnachricht für diesen Stream war. Ist dies der Fall, hat die Ankündigungsnachricht das (jeweilige) Ringsegment in entsprechender Richtung bereits einmal vollständig durchlaufen, also alle Ringknoten des (jeweiligen) Ringsegmentes in entsprechender Richtung einmal erreicht und sollte nicht weiter kreisen. Entsprechend leitet derjenige Ringknoten, der der Einspeiser war, die Ankündigungsnachricht als einziger nicht über den anderen Ringport weiter. Durch diese zusätzliche Überprüfung, die sich auf einfache Weise lokal in den Netzwerkknoten implementieren lässt, kann ein endloses Kreisen zuverlässig vermieden werden. Die Notwendigkeit, für eine gegebene Topologie vorab schleifenfreie Bäume zu ermitteln, entlang derer die Ankündigungsnachricht gezielt verbreitet wie, wie es in der WO 2019/001718 A1 vorgesehen ist, entfällt.

Dass eine Ankündigungsnachricht für einen Stream im Netzwerk weitergeleitet bzw. in diesem verbreitet wird, bedeutet insbesondere, dass in an sich bekannter Weise die Knoten die Ankündigungsnachricht jeweils empfangen, verarbeiten, enthaltene Informationen speichert und enthaltene Informationen, ggf. zusammen mit zusätzlichen Informationen, wiederum in Form einer Ankündigungsnachricht an den oder die nächsten Knoten bzw. Endgeräte weiterleiten (Peer-to-Peer).

Es versteht sich, dass ein Netzwerk mehr als ein Ringsegment, beispielsweise zwei, drei oder mehr Ringsegmente umfassen oder durch solche gegeben sein kann. Die Ringsegmente können miteinander gekoppelt sein.

Dann werden die erfindungsgemäß vorgesehenen Abläufe bevorzugt in zwei oder mehr, insbesondere allen Ringsegmenten durchgeführt. Insbesondere wird die erfindungsgemäß vorgesehene zusätzliche Überprüfung von den oder für die Ringknoten, ob diese der (jeweilige) Einspeiser einer an einem Ringport empfangenen Stream-Ankündigungsnachricht waren, für bzw. von sämtlichen Ringknoten aller Ringsegmente durchgeführt. Weiterhin geben dann bevorzugt die die Rolle des Einspeisers übernehmenden Ringknoten aller Ringsegmente an einem nicht am jeweiligen Ringsegment teilnehmenden Port empfangene Ankündigungsnachrichten jeweils über einen oder beide dem jeweiligen Ringsegment zugeordnete Ringports weiter.

Es sei angemerkt, dass für den Fall, dass ein einzelnes Ringsegment vorliegt, die Ankündigungsnachricht vom Einspeiser-Ringknoten zweckmäßiger Weise immer über beide Ringports weitergeleitet und in beide Richtungen im Ring verbreitet wird, bis sie wieder beim Einspeiser ankommt. Insbesondere für Konstellationen mit gekoppelten Ringen und mehr als einer Koppelstrecke, worauf weiter unten noch eingegangen wird, kann es jedoch auch zweckmäßig sein, dass -vor allem im zweiten Ringsegment - Ankündigungsnachrichten von einem einen Einspeiser bildenden Ringknoten nur über einen der beiden Ports weitergeleitet werden.

Eine bevorzugte Ausgestaltung des erfindungsgemäßen Verfahrens zeichnet sich dadurch aus, dass die Überprüfung für den oder von dem jeweiligen Ringknoten, ob er der oder (im Falle mehrerer) der jeweilige Einspeise-Ringknoten für eine Ankündigungsnachricht war, erfolgt, indem von dem jeweiligen oder für den jeweiligen Ringknoten geprüft wird, ob er die Ankündigungsnachricht zuvor bereits über einen an dem oder dem jeweiligen Ringsegment nicht teilnehmenden Port empfangen hat. Der einzige Ringknoten eines gegebenen Ringsegmentes, der eine Ankündigungsnachricht über einen nicht an diesem Ringsegment teilnehmenden Ringport (ein Nicht-Ringport aus Sicht dieses Segmentes) empfängt, ist derjenige, über den die Ankündigungsnachricht in dieses Ringsegment eintritt, also der Einspeise-Ringknoten dieses Segmentes. Eine entsprechende Überprüfung stellt daher eine einfache Identifikationsmöglichkeit des (jeweiligen) Einspeisers dar.

Weiterhin kann vorgesehen sein, dass der (jeweilige) Einspeise-Ringknoten die an einem an dem oder dem jeweiligen Ringsegment nicht teilnehmenden Port empfangene Ankündigungsnachricht über seine beiden an dem oder dem jeweiligen Ringsegment teilnehmenden Ringports weiterleitet, und er die Ankündigungsnachricht vor deren Weiterleitung über den einen Ringport mit einem Kenner versieht und vor deren Weiterleitung über den anderen Ringport mit einem anderen, von dem einen Kenner verschiedenen Kenner versieht, wobei bevorzugt VLAN IDs und/oder Farben als Kenner verwendet werden.

Aus dem Bereich der sogenannten Seamless Redundancy (insbesondere gemäß IEEE 802.1 CB) ist es bekannt, für zwei disjunkten Bäume verschiedene Farben, konkret rot und blau zu verwenden. Dies kann auf die Ringtopologie, welche gemäß der vorliegenden Erfindung genutzt wird, übertragen werden. Betrachtet man ein Ringsegment, können die beiden Drehrichtungen als den disjunkten Bäumen entsprechend betrachtet werden und insbesondere den beiden Drehrichtungen verschiedene Kenner in Form von verschiedenen Farben, wie rot und blau zugeordnet werden.

Beispielsweise kann eine Reservierung für "Rot" und "Blau" in jedem Knoten auf den beiden am (jeweiligen) Ringsegment teilnehmenden Ports lokal wie zwei Reservierungen betrachtet werden. Die Reservierung kann dabei insbesondere den Umstand des Ringes mit der lokalen Kennzeichnung der Ringports ausnutzen, um lokal die beiden Richtungen im Ring festlegen zu können.

Die Farben können ein lediglich "gedachtes" Unterscheidungskriterium insbesondere für die zwei Drehrichtungen sein. Tatsächlich können als Kenner beispielsweise VLAN IDs - insbesondere als in Ankündigungsnachrichten enthaltene Kenner - und/oder Port Nummern - insbesondere als rein lokal für die Reservierungen verwendete Kenner - zum Einsatz kommen.

Jeder Knoten kann beispielsweise eine beliebige lokale Zuordnung von "Rot" und "Blau" an die beiden Ringports eines Ringsegmentes vornehmen. Die Reservierung von Ressourcen, insbesondere für Endgeräte, die Datenpakete senden bzw. empfangen möchten, die unter Nutzung der Ressourcen über das Ringsegment zu transportieren sind, können dann im Netzwerk mit der jeweiligen lokalen Farbe - bzw. mit zwei die beiden Farben repräsentierenden Kennern, etwa VLAN IDs und/oder Port Nummern - betrachtet und/oder durchgeführt werden.

Bei TSN kann die Farbkennzeichnung für beide Pfade in der Reservierung durch die Verwendung einer getrennten VLAN ID in der Stream Beschreibung erfolgen. Diese wird in der Regel auch in der Data-Plane verwendet, um den Weiterleiteweg zu bestimmen. Die Kennzeichnung in den Daten und der Stream Beschreibung, welche die Ankündigungsnachricht darstellen bzw. von dieser umfasst sein kann, muss unter Durchführung des erfindungsgemäßen Verfahrens nicht erfolgen. Die interne Verarbeitung der Reservierungsnachrichten durch das Reservierungsprotokoll kann mit rein lokalen VLAN IDs arbeiten, um zwei Kenner, insbesondere die beiden Farben, intern abzubilden.

Die durch das Reservierungsprotokoll intern gespeicherte Information entspricht dann insbesondere einer Information für einen Kenner - selbst wenn dieser nur lokal vergeben wurde. Die farbliche Kennzeichnung, bzw. die Kennzeichnung durch die beiden Farben repräsentierende Kenner, kann intern zur Unterscheidung der Information der beiden Ports verwendet werden.

Der interne Ablauf bei der Reservierung im (MRP/HRP) Ring an den beiden Ports mit dem von dem ersten Knoten in den Advertise Nachrichten enthaltenen Kenner kann dann in Analogie bzw. ähnlich zu dem in der WO 2019/001718 A1 beschriebenen Vorgehen ablaufen. Dabei verhalten sich die beiden lokal von dem ersten Ringknoten vergebenen Kenner wie die Kenner einer Reservierung auf zuvor festgelegten schleifenfreien Pfaden in einem Ring mit einer Farbe für jede Richtung des Ringes. Das Reservierungsprotokoll erzeugt für jeden Kenner einen Stream-Eintrag mit den dazugehörigen Informationen aus der Ankündigungsnachricht, insbesondere dem Advertise und den lokalen Reservierungszustand. Bei einer erfolgreichen Reservierung wird für die Data-Plane die Weiterleitung eingerichtet. Für die Reservierung im (MRP/HRP) Ring wird dabei eine gemeinsame Weiterleitung in der Data-Plane für die Reservierung mit beiden Kennern eingerichtet.

Beim Verlassen des (jeweiligen) Ringsegmentes wird bevorzug eine gemeinsame Beschreibung für beide lokalen Kenner, etwa Farben, zu den Endgeräten weitergegeben. Dieses Vorgehen ist auch aus der WO 2019/001718 A1 bei der Benutzung von Mechanismen aus IEEE 802.1 CB in der Dataplane beschrieben.

Im Anschluss an die Stream-Einrichtung bei der Datenübertragung, also der Übertragung bzw. Weiterleitung der Datenpakete sind eine Adresse und ein VLAN ausreichend. Dadurch ist auf der Data-Plane kein Unterschied der verwendeten Farbe der Reservierung erkennbar, alle Daten werden im Ring mit der gleichen Kennung weitergeleitet. Die Reservierungen könnten durch unterschiedliche Farben entstanden sein.

Die nicht zwingend erforderliche, sondern optionale Verwendung von unterschiedlichen Kennern in den Ankündigungs-, insbesondere Talker/Listener Advertise Nachrichten bietet dabei einen Vorteil bei der Diagnose, um die Ankündigungs-, insbesondere Advertise Nachrichten der Reservierung aus den beiden Drehrichtungen im Ring unterscheiden zu können. Rein intern können auch die Ringport-Nummern verwendet werden (Empfang über ersten oder zweiter Ringport) - dabei sind die Ankündigungs-, insbesondere Talker Advertise Nachrichten nicht durch einen unterschiedlichen Kenner unterscheidbar.

Es sei angemerkt, dass eine Ankündigungsnachricht bzw. Stream-Beschreibung in der Regel zu genau einem Stream gehört. Eine solche kann für die eindeutige Identifizierung bzw. Zuordnung zu einem Stream insbesondere in an sich bekannter Weise eine Stream-ID und/oder Stream Adresse, insbesondere designierte Stream Adresse (Stream DA), enthalten.

Als Stream über eine geschützte Verbindung, können im einfachsten Falle Datenpakete zwischen genau einem Sender (insbesondere bei TSN als "Talker" bezeichnet) und genau einem Empfänger (insbesondere bei TSN als "Listener" bezeichnet) übertragen werden. Es ist aber natürlich auch möglich, dass ein Stream zwischen einem Sender/Talker und mehreren Empfängern/Listenern eingerichtet wird, sich also mehr als ein Empfänger/Listener an einem von einem Sender/Talker ankündigten bzw. beschriebenen Stream anmelden. Dies wird auch als Multiple Listener per Talker bezeichnet und ist durch die Definition eines Stream aus der IEEE 802.1Q als gerichteter Datenfluss von einem Talker zu einem Listener ersichtlich. auch ist es möglich, dass ein Stream zwischen mehreren Sendern/Talkern und einem Empfänger/Listener eingerichtet wird, also mehrere Sender/Talker über einen Stream bzw. eine geschützte Verbindung Datenpakete an ein gemeinsames Ziel, einen Empfänger/Listener senden. Dieses auch als Multiple Talker per Stream bezeichenbare Szenario ist in der ebenfalls auf die Anmelderin zurückgehenden europäischen Patentanmeldung mit dem Aktenzeichen 18154319.0 beschrieben.

Initiiert wird ein Stream zweckmäßiger Weise entweder von dem einen Sender/Talker oder - im Falle von mehreren Sendern/Talkern - dem einen Empfänger/Listener. Der Stream-Initiator kann somit sowohl ein Sender/Talker als auch ein Listener/Empfänger sein. Bei der Stream-Ankündigungsnachricht kann es sich entsprechend sowohl um einen Talker als auch Listener Advertise handeln. Bei den Teilnahme-Nachrichten, die von dem oder den Stream-Teilnehmern zur Anmeldung an einem Stream gesendet werden können, entsprechend um Listener oder Talker Readys bzw. Joins.

Eine weitere Ausführungsform des erfindungsgemäßen Verfahrens zeichnet sich dadurch aus, dass die Überprüfung für den oder von dem jeweiligen Ringknoten, ob er der oder der jeweilige Einspeise-Ringnoten für die Ankündigungsnachricht war, erfolgt, indem geprüft wird, ob der jeweilige Ringknoten die Ankündigungsnachricht zuvor bereits ohne einen (der beiden) Kenner empfangen hat. Beispielsweise kann vorgesehen sein, dass jeder Knoten im Anschluss an den Empfang einer - insbesondere von dem Einspeiser-Ringknoten - mit einem Kenner versehenen Ankündigungsnachricht seine Adresstabelleneinträge dahingehend überprüft, ob die Ankündigungsnachricht ohne Kenner bereits vorhanden ist. Dies stellt eine weitere besonders geeignete Möglichkeit zur Identifizierung des einspeisenden Ringknotens, am die Weitergabe enden soll, dar.

Weiterhin kann zweckmäßiger Weise vorgesehen sein, dass jeder Ringknoten eine an einem Port empfangene Ankündigungsnachrichtüber über sämtliche (verbleibenden) Ports mit Ausnahme desjenigen Ports, an welchem er die (jeweilige) Ankündigungsnachricht empfangen hat (Empfangsport) weiterleitet. Dabei kann vorgesehen sein, dass die Ankündigungsnachricht unverändert weitergeleitet wird. Dies gilt insbesondere für die Ports des (jeweiligen) Ringsegmentes, die nicht an dem jeweiligen Ringsegment teilnehmen.

Durch die Weitergabe über sämtliche Ports mit Ausnahme des Empfangsports kann insbesondere sichergestellt werden, dass etwaig an dem jeweiligen Ringknoten angeschlossene Endgeräte Ankündigungsnachrichten erhalten und sich an zugehörigen Streams, insbesondere durch absenden einer Teilnahmenachricht, etwa Listener oder Talker Joins bzw. Readys, anmelden können.

Dabei kann vorgesehen sein, dass Ankündigungsnachrichten für Streams immer direkt, insbesondere unmittelbar im Anschluss an den erstmaligen Empfang, weitergegeben werden. Insbesondere in einem solchen Fall kann jedoch ein Update der Information nötig werden, sobald die Ankündigungsnachricht über den jeweils zweiten Ringport erneut empfangen wird. Besonders die akkumulierte Latenz (englisch: accumulated latency) kann über einen "langsameren" Ausbreitungsweg größer sein und es muss immer die insgesamt betrachtet größtmögliche Latenz betrachtet werden.

Insbesondere, da eine Ausbreitung der Ankündigungsnachricht in der Regel in beide Richtungen in einem Ringsegment erfolgt und in beiden Richtungen das Ringsegment vollständig durchlaufen wird, da alle Ringknoten mit Ausnahme des Einspeisers nach einem Durchlauf die Nachricht "weitergeben" (Peer-to-Peer), erhalten die Ringknoten üblicher Weise jede Ankündigungsnachricht zweimal, einmal an ihrem einen und einmal an ihrem anderen Ringport. Diejenige Ankündigungsnachricht, die später empfangen wird, wird meist eine Angabe zu einer größeren maximalen Latenz umfassen. Endgeräte sollten grundsätzlich die Information über die maximal mögliche Latenz erhalten, die unter Berücksichtigung beider möglicher redundanter Übertragungswege auftreten kann.

Entsprechend kann vorgesehen sein, dass für den Fall, dass ein Ringknoten eine bereits an einem an dem oder dem jeweiligen Ringsegment teilnehmenden Ringport empfangene Ankündigungsnachricht nochmals an dem anderen an dem oder dem jeweiligen Ringsegment teilnehmenden Ringport empfängt, eine Aktualisierung der Ankündigungsnachricht erfolgt. Dies insbesondere, was eine mit der Ankündigungsnachricht für den Stream beschriebene bzw. angegebene maximale Latenz angeht. Dass "die gleiche" Ankündigungsnachricht ein zweites Mal empfangen wird bedeutet insbesondere, dass ein zweites Mal eine Ankündigungsnachricht mit der gleichen Stream ID und/oder Stream DA (designnierte Stream-Adresse) bei einem Knoten ankommt.

Es sei angemerkt, dass die Weitergabe der Ankündigungsnachricht auf dem späteren schnellen Übertragungsweg der Datenübertragung des Streams länger dauern kann und unabhängig von der benötigten Zeit für die Übertragung der Stream-Daten sein kann, da die Information insbesondere durch das Reservierungsprotokoll empfangen, ausgewertet, verändert und erst dann weitergegeben wird. Die dafür benötigte Zeit ist abhängig von der Rechenleistung des Knotens. Die Weiterleitung der Stream Daten erfolgt vorteilhaft in Hardware und ist deutlich schneller als die Weiterleitung der Ankündigungs-, insbesondere Talker oder Listener Advertise Information.

In Weiterbildung des Verfahrens kann ferner vorgesehen sein, dass die Ringknoten, nachdem sie eine Ankündigungsnachricht für einen Stream erstmalig an einem ihrer beiden Ringports (mit oder ohne Kenner) empfangen haben, zunächst abwarten, bis die Ankündigungsnachricht für diesen Stream auch am anderen Ringport, also aus der entgegengesetzten Drehrichtung (ggf. mit einem anderen Kenner) empfangen wird, bevor die Ankündigungsnachricht für den Stream über einen oder mehrere nicht an dem (jeweiligen) Ringsegment teilnehmenden Port, insbesondere an Endgeräte, weitergeleitet wird. Wird auf die zweite Ankündigungsnachricht gewartet, kann direkt die wesentliche Information, insbesondere größere Latenz, weitergegeben werden, es muss nicht nach einer erstmaligen Weitergabe noch eine Aktualisierung erfolgen.

Was die Kenner angeht, die insbesondere verwendet werden, um aus zwei Richtungen empfangene Ankündigungsnachrichten voneinander unterscheiden und Fehlermeldungen vermeiden zu können, können diese auch lokal vergeben werden. Eine weitere Ausführungsform zeichnet sich daher dadurch aus, dass die Ringknoten Ankündigungsnachrichten, die sie an ihrem einen an dem oder dem jeweiligen Ringsegment teilnehmenden Ringport empfangen einen Kenner zuweisen und Ankündigungsnachrichten, die sie an ihrem anderen an dem oder dem jeweiligen Ringsegment teilnehmenden Ringport empfangen einen von dem einen Kenner verschiedenen anderen Kenner zuweisen, und bevorzugt die Ringknoten empfangene Ankündigungsnachrichten bzw. darin enthaltene Informationen zusammen mit dem jeweils zugewiesenen Kenner speichern und/oder weiterverarbeiten.

Dies gilt insbesondere für diejenigen Ringknoten, die nicht der Einspeise-Ringknoten des oder des jeweiligen Ringsegmentes für die Ankündigungsnachricht waren und/oder für den Fall, dass der Einspeiser-Ringknoten keinen Kenner in die Ankündigungsnachricht einfügt.

Bei lokal vergebenen Kennern handelt es sich bevorzugt um solche, die jeweils demjenigen an dem oder dem jeweiligen Ringsegment teilnehmenden Ringport zugeordnet sind, über den die jeweilige Ankündigungsnachricht empfangen wurde.
Ein Ringknoten, der einen Ringport 1 und Ringport 2 in einem Ringsegment hat, kann beispielsweise allen Ankündigungsnachrichten, die er über Ringport 1 empfängt, die Nummer 1 zuordnen und allen über Ringport 2 empfangenen Ankündigungsnachrichten die Nummer 2. Zwei beliebige andere Kenner, die sich voneinander unterscheiden, können gleichermaßen verwendet werden.

Durch die Kennzeichnung der Nachrichten des Reservierungsprotokolls (lokal und/oder in der Ankündigung) kann eine Unterscheidung zwischen den beiden Wegen erfolgen, welche auch durch Aufzeichnung der ausgetauschten Informationen nachvollziehbar wird.

Weiterhin ist zweckmäßiger Weise vorgesehen, dass, wenn eine Ankündigungsnachricht von einem Ringknoten an einem Ringport empfangen wird, festgelegt bzw. gespeichert bzw. konfiguriert wird, dass die Datenweiterleitung über den anderen Ringport zu erfolgen hat.

Es sei angemerkt, dass, wenn man etwa davon ausgeht, dass als (gedachte) Kenner die Farben Rot und Blau verwendet werden, sich durch die beliebige lokale Zuordnung für jeden Stream aus Sicht von jedem Ringknoten eine eigene Drehrichtung für die lokale rote und blaue Reservierung im Netzwerk ausgehend von dem ersten Ringknoten (Einspeiser) im Ring ergeben kann. Es ist möglich, dass sich für einen Stream der lokale Kenner - eventuell in jedem Knoten im Ringsegment - ändert, dies insbesondere, wenn jeder Ringknoten lokal Kenner verwendet, die bevorzugt dem jeweiligen Ringport zugeordnet sind. Dies kann insbesondere der Fall sein, wenn die Advertise Information ohne Kenner weitergegeben wird und der Kenner in jedem Ringknoten lokal vergeben wird.

Durch die lokale Kennzeichnung der Reservierung mit Kennern im Ringsegment können die Zustände in beide Richtungen des Ringsegments sowie Fehlermeldungen getrennt voneinander betrachtet werden, was u.a. für Diagnosezwecke vorteilhaft sein kann.

Werden Kenner (in der Ankündigungsnachricht und/oder lokal von den Ringknoten) verwendet, kann zuverlässig verhindert werden, dass Fehlermeldungen auftreten. Bei AVB beispielsweise würde es zu einem Fehler kommen, wenn eine Ankündigungsnachricht mit der gleichen Stream ID erneut empfangen würde. Werden in die in beide Richtungen in einem Ring verbreiteten Ankündigungsnachrichten zwei verschiedene Kenner eingefügt, können die beiden Nachrichten zuverlässig unterschieden werden. Gleiches gilt, wenn jeder Ringknoten Ankündigungsnachrichten, die er an seinem einen Ringport empfängt einen Kenner zuordnet und Ankündigungsnachrichten, die er an seinem anderen Ringport empfängt, einen anderen, von dem ersten verschiedenen Kenner (beispielsweise die beiden Port-Nummern).

Da für die Ringknoten grundsätzlich gilt, dass sie genau zwei an einem gegebenen Ringsegment teilnehmende Ringports aufweisen und die Weiterleitung - ohne dass zusätzliche Informationen erforderlich sind - jeweils lokal an dem anderen an dem (jeweiligen) Ringsegment teilnehmenden Ringport erfolgen kann, ist die Verwendung eines Kenners, beispielsweise einer Farbe bzw. VLAN ID bzw. Port Nummer nur lokal für die Reservierung von Bedeutung. Das Prinzip der Reservierung entspricht jedoch dem von zwei eingerichteten Wegen im Netzwerk. Grundsätzlich gilt, dass die Information darüber, welche beiden Ports der Ringknoten an dem (jeweiligen) Ringsegment teilnehmende Ringports sind, über ein Redundanzprotokoll, beispielsweise MRP und/oder HRP, bereitgestellt und/oder erhalten werden können. MRP ist dabei die bekannte Abkürzung für das Media Redundancy Protocol und HRP steht für das High Speed Redundancy Protocol.

Was die Reservierung von Netzwerkressourcen an den Ringports angeht, kommt bevorzugt ein Reservierungsprotokoll zum Einsatz. Dabei kann vorgesehen sein, dass in der Control-Plane des Reservierungsprotokolls eine logische Data-Plane angenommen wird, bei der eine Weiterleitung mit den gleichen Kennzeichnungen der Daten erfolgt. Dadurch sind die Daten auf den beiden logischen Pfaden der Control-Plane identisch, insbesondere ist anhand der im Ring gesendeten Stream-Datenpakete keine Unterscheidung zwischen den beiden Ausbreitungswegen im Ring möglich. Es kann insbesondere ein erweitertes Reservierungsprotokoll zum Einsatz kommen, welches mit zwei logischen Control-Plane Pfaden arbeitet, nur eine logische Data-Plane einrichtet und die in dieser Anmeldung beschriebenen besonderen Regeln bei der Weitergabe der Ankündigungs-, insbesondere Advertise Information umsetzt

Bei den Ressourcen, die im Rahmen des erfindungsgemäßen Verfahrens an beteiligten Knoten entlang der Übertragungswege zu reservieren sind bzw. reserviert werden, handelt es sich insbesondere um diejenigen Ressourcen, die auch gemäß den vorbekannten, standardisierten Verfahren reserviert werden, um eine geschützte Verbindung zu enthalten. In diesem Zusammenhang sei beispielsweise auf SRP, also das Stream Reservation Protocol, insbesondere IEEE 802.1 Q verwiesen.

Die eigentliche Reservierung von Ressourcen findet in an sich bekannter Weise in der Regel nicht bereits statt, wenn eine Ankündigungsnachricht, etwa ein Talker oder Listener Advertise, einen Knoten erreicht, sondern wenn in Reaktion auf den Empfang einer solch durch ein Endgerät, welches an einem angekündigten Stream teilnehmen möchte, eine Teilnahmenachricht, etwa ein Listener oder Talker Join bzw. Ready, herausgegeben und in entgegengesetzter Richtung auf dem Pfad bzw. den Pfaden zurück zu dem Stream-Initiator, welcher die Ankündigungsnachricht gesendet hat, übertragen wird. Auch in diesem Zusammenhang wird auf die aus dem Stand der Technik hinlänglich vorbekannten, standardisierten Abläufe verwiesen.

Es kann vorgesehen sein, dass das Netzwerk nicht nur eines sondern zwei oder mehr miteinander gekoppelte Ringsegmente umfasst.

Dann können die zwei oder - im Falle von mehr als zwei Segmenten - jeweils zwei gekoppelten Ringsegmente über einen an den oder den jeweils zwei Ringsegmenten teilnehmenden Koppel-Ringknoten miteinander gekoppelt sein. Der Koppel-Ringknoten kann zwei an dem oder dem jeweils ersten Ringsegment teilnehmende erste Ringports, die nicht an dem oder dem jeweiligen zweiten Ringsegment teilnehmen, und zwei an dem oder dem jeweils zweiten Ringsegment teilnehmende zweite Ringports, die nicht an dem oder dem jeweils ersten Ringsegment teilnehmen, und optional weitere, weder an dem oder dem jeweils ersten noch an dem oder dem jeweils zweiten Ringsegment teilnehmende Ports aufweist. Der Koppel-Ringknoten bildet weiterhin insbesondere den Einspeise-Ringknoten für das oder das jeweils zweite Ringsegment und leitet insbesondere Ankündigungsnachrichten, die er an einem der beiden ersten Ringports empfängt, sowohl über den anderen der beiden ersten Ringports als auch über die beiden zweiten Ringports weiter.

Auch ist es möglich, dass die zwei oder jeweils zwei Ringsegmente über zwei, drei oder vier Koppel-Ringknoten miteinander gekoppelt sind, die jeweils zwei Ringports aufweisen, die an einem der oder der jeweils zwei Ringsegmente teilnehmen. Die zwei oder mehr Koppel-Ringknoten sind dann insbesondere über zwei Koppelstrecken miteinander verbunden. Jede der beiden Koppelstrecke verbindet dann bevorzugt einen an keinem der oder der jeweils zwei Ringsegmente teilnehmenden Koppel-Port des einen Koppel-Ringknotens mit einem an keinem der oder der jeweils zwei Ringsegmente teilnehmenden Koppel-Port des anderen Koppel-Ringknotens.

In Weiterbildung kann ferner vorgesehen sein, dass eine Koppelstrecke eine aktive Koppelstrecke und die andere Koppelstrecke eine passive Koppelstrecke darstellt, wobei die aktive Koppelstrecke zwei aktive Koppel-Ports (Aktiv-Koppel-Ports) und die passive Koppelstrecke zwei passive Koppel-Ports (Passiv-Koppel-Ports) verbindet.

Von den beiden Koppelstrecken bildet dann insbesondere die passive Strecke eine Standby-Strecke, über die keine Datenpakete übertragen werden, die für den Fall eines Fehlers in der anderen Koppelstrecke jedoch "übernehmen" kann.

Es kann sein, dass ein Koppel-Ringknoten, wenn er eine Ankündigungsnachrichten für einen Stream erstmalig an einem Ringport empfängt, über seinen anderen Ringport nicht jedoch über seinen Aktiv- oder seinen Passiv-Koppel-Port weiterleitet, und insbesondere, wenn er eine zuvor bereits ein erstes Mal an einem Ringport empfangene Ankündigungsnachricht für einen Stream ein zweites Mal an seinem anderen Ringport empfängt, die Ankündigungsnachricht über den einen Ringport und über seinen Aktiv- oder Passiv-Koppel-Port weiterleitet.

Auch kann vorgesehen sein, dass ein Koppel-Ringknoten, der eine Ankündigungsnachricht für einen Stream an einem Aktiv-Koppel-Port empfängt (und insbesondere den Einspeiser für das zweite Ringsegment darstellt), die Ankündigungsnachricht nur über einen seiner beiden Ringports weiterleitet.

Alternativ oder zusätzlich kann vorgesehen sein, dass ein Koppel-Ringknoten, der eine Ankündigungsnachricht für einen Stream insbesondere erstmalig an seinem Passiv-Koppel-Port empfängt, die Ankündigungsnachricht über keinen seiner beiden Ringports weiterleitet und diese zwischenspeichert. Die bereits am Passiv-Koppel-Port empfangene Ankündigungsnachrichtwird dann bevorzugt erst weitergegeben, wenn die Ankündigungsnachricht auch über einen Ringport des Koppel-Ringknotens empfangen wird.

Weiterhin bevorzugt kann, wenn zwei oder mehr Ringsegmente vorhanden und über Koppel-Ringknoten verbunden sind, vorgesehen sein, dass die Koppel-Ringknoten Stream-Datenpakete duplizieren und/oder duplizierte Stream-Datenpakete herausfiltern können, insbesondere Seamless Redundancy, bevorzugt gemäß IEEE 802.1 CB unterstützen.

Dies ist besonders vorteilhaft, um eine "Seamless Redundanz" für Streams für die Ringkopplung zu erzielen, also für den Fall, dass keine der beiden Koppel-Strecken sich in einem passiven bzw. Standby-Zustand für die Datenübertragung des Streams befindet, sondern über beide gleichzeitig Stream-Datenpakete übertragen werden sollen. Es sei angemerkt, dass dann für anderen, nicht Stream-Datenverkehr, insbesondere Best-Effort-Traffic, bevorzugt weiterhin gelten kann, dass eine der Koppelstrecken eine passive Koppelstrecke darstellt, über welche keine Datenpakete dieser Art von Verkehr übertragen wird. Streams werden eingerichtet und benutzen CB und damit beide Strecken gleichzeitig.

Der Stream-Initiator und der wenigstens eine Stream-teilnehmer können weiterhin bevorzugt Redundanz-Tags in Stream-Datenpakete einfügen und/oder aus Stream-Datenpaketen entfernen. Diese unterstützen insbesondere (ebenfalls) Seamless Redundancy, bevorzugt gemäß IEEE 802.1 CB.

Wird CB in einer Konstellation mit zwei Koppelstrecken unterstützt, können über beide Koppelstrecken simultan Datenpakete übertragen werden, so dass im Fehlerfall insbesondere keine Umschaltzeit auftritt.

Unterstütz einer oder unterstützen mehrere (Koppel-) Ringknoten CB, kann hierüber auch ein Rückspeiseschutz eingerichtet bzw. erhalten werden. Für den Fall, dass ein "öffnen" eines Ringsegmentes insbesondere über einen Ringmanager nicht oder nicht richtig funktioniert, kann dann insbesondere unter Nutzung der CB-Mechanismen verhindert werden, dass unerwünschte Duplikate beim Empfänger ankommen.

Sind zwei oder mehr Ringsegmente vorhanden, erfolgt bevorzugt ein logisches "verlassen" des ersten bzw. jeweils vorangehenden Ringsegmentes und eine erneute Weitergabe wie von einem Endgerät im (jeweils) weiteren gekoppelten Ringsegment der Ankündigungs-, insbesondere Advertise-Informationen durch das modifizierte Stream-Reservierungsprotokoll.

Durch eine Weitergabe der empfangenen Ankündigungsnachricht erst beim Empfang der zweiten Ankündigungsnachricht in das zweite bzw. jeweils nachfolgende Ringsegment kann die Reservierung im zweiten bzw. jeweils nachfolgenden Ringsegment unabhängig von der des Ersten durchgeführt werden und ein Zurücksenden zum ersten bzw. jeweils vorhergehenden Ringsegment wird verhindert.

Eine weitere Ausführungsform zeichnet sich dadurch aus, dass im Anschluss an die Einrichtung des Streams Datenpakete von dem Stream-Initiator an den wenigstens einen Stream-Teilnehmer oder von dem wenigstens einen Stream-teilnehmer an den Stream-Initiator unter Nutzung von an Ringknoten reservierten Ressourcen übertragen werden, wobei die Datenpakete von demjenigen Ringknoten, über den sie das oder das jeweilige Ringsegment erreichen, dupliziert und in beide Richtungen des oder des jeweiligen Ringsegmentes weitergeleitet werden, wobei ein Ringmanager des oder des jeweiligen Ringsegmentes, der insbesondere von einem der Ringknoten des oder des jeweiligen Ringsegmentes, bevorzugt von einem an allen Ringsegmenten teilnehmenden Ringknoten gebildet wird oder umfasst ist, die Weiterleitung von Datenpaketen an einer Stelle in dem oder dem jeweiligen Ringsegment unterbindet, um zu verhindern, dass Duplikate der Datenpakete zu dem Empfänger gelangen. Im Fehlerfall kann eine Unterbrechung an einer anderen beliebigen Stelle im Ring auftreten und der Ringmanager leitet die Daten ungehindert weiter.

Diese Ausführungsform entspricht mit anderen Worten dem Stand der Technik, beispielsweise von MRP vorbekannten Möglichkeit bei Vorliegen einer Ringtopologie dafür zu sorgen, dass die eigentliche Datenübertragung immer nur über einen von zwei möglichen redundanten Wegen erfolgt und entsprechend keine Duplikate gefiltert werden müssen und es zu keinen kreisenden Telegrammen im Ring kommen kann. Die Weiterleitung kann und wird dann für beide Richtungen im Ringsegment durch das Reservierungsprotokoll aktiviert sein, beide Pfande sind somit "aktiv". Der Ringmanager "öffnet" den Ring und verhindert somit, dass Duplikate bei einem am Stream teilnehmenden Empfänger (Listener) ankommen.

Gegenstand der Erfindung ist auch ein Netzwerkknoten, der zur Durchführung des erfindungsgemäßen Verfahrens ausgebildet und/oder eingerichtet ist. Ein Netzwerkknoten, der auch als Netzelement bezeichnet werden kann, kann beispielsweise in Form einer Bridge oder eines Switches vorliegen.

Der erfindungsgemäße Netzwerkknoten hat sich als besonders geeignet für die Durchführung des erfindungsgemäßen Verfahrens erwiesen.

Der erfindungsgemäße Netzwerkknoten weist in bevorzugter Ausgestaltung drei oder mehr Ports auf und ist dazu ausgebildet und/oder eingerichtet zu ermitteln oder mitgeteilt zu bekommen, welche seiner Ports an einem gegebenen Ringsegment teilnehmen und Ringports dieses Ringsegmentes darstellen, und bevorzugt welcher oder welche weiteren seiner Ports an dem gegebenen Ringsegment nicht teilnehmen, und zu überprüfen, ob er eine Ankündigungsnachricht, die er an einem Ringport empfängt, zuvor bereits an einem nicht an dem gegebenen Ringsegment teilnehmenden Port empfangen hat, und insbesondere die empfangene Ankündigungsnachricht nur für den Fall über seinen anderen Ringport weiterzuleiten, dass er die Ankündigungsnachricht zuvor nicht bereits über einen nicht an dem gegebenen Ringsegment teilnehmenden Port empfangen hat. Selbstverständlich ist es möglich, dass ein Netzwerkknoten an mehr als einem Ringsegment teilnimmt und nicht nur zwei sondern vier, sechs oder mehr Ports aufweist, von denen jeweils zwei an einem Ringsegment teilnehmen. Ports, die an einem Ringsegment teilnehmen stellen nur Ringports dieses Segmentes und, sofern vorhanden, Nicht-Ringports eines - ggf. mehrerer - anderer Segmente dar.

Das Netzwerk ist weiterhin zweckmäßiger Weise ein AVB- oder TSN-Netzwerk bzw. ein AVB- oder TSN-fähiges Netzwerk. Insbesondere die Netzwerkknoten des Netzwerkes sind AVB- oder TSNfähig, unterstützen einen oder mehrere AVB- oder TSN-Standards, beispielsweise die Reservierung von Ressourcen für eine Weiterleitung mit garantierter Latenz. Dies gilt entsprechend bevorzugt für den erfindungsgemäßen Netzwerkknoten.

Ein weiterer Gegenstand der Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin zeigt jeweils in rein schematischer Darstellung
Figur 1 ein industrielles TSN-Netzwerk mit mehreren Netzwerkknoten, an dem mehrere Endgeräte teilnehmen;
Figur 2 das Netzwerk aus Figur 1 mit zwei daran teilnehmenden Endgeräten für sechs Schritte gemäß MRP;
Figur 3 beispielhafte Zuordnung von zwei Farben an den Ringports der Ringknoten aus Figur 1;
Figur 4 Weiterleitung der Ankündigungsnachricht in beide Richtungen des Ringsegmentes aus Figur 1;
Figur 5 links die aktiven Pfade und rechts die Datenübertragung;
Figur 6 oben die Richtungen aus Sicht des dem Talker am nächsten liegenden Ringknotens und unten aus Sicht des dem Listener am nächsten liegenden Ringknotens;
Figur 7 die lokale Farbänderung im Netzwerk;
Figur 8 links ein Netzwerk mit zwei gekoppelten Ringsegmenten und die rechts die Weitergabe der Ankündigungsnachricht durch den Koppel-Ringknoten;
Figur 9 ein Netzwerk mit zwei Ringsegmenten mit Standby-Kopplung;
Figur 10 eine Standby-Kopplung mit zwei, drei oder vier Koppel-Ringknoten;
Figuren Abläufe für die Reservierung für das Szenario 11- 13 gemäß Figur 9 mit Standby-Kopplung;
Figur 14 ein Netzwerk mit zwei Ringsegmenten und redundanter CB-Kopplung;
Figur 15 die Unterbrechung durch MRP bzw. den jeweiligen Ringmanager in den beiden Ringsegmenten und die Duplikatefilterung mit CB in den Koppel-Ringknoten;
Figur 16 die lokale Weiterleiteinformation für das Szenario gemäß Figur 14 und 15;
Figur 17 die eingerichteten CB-Filter in den Koppel-Ringknoten für das Szenario gemäß Figur 14 und 15;
Figur 18 die Ausbreitungswege der Advertise Information mit lokal vergebenen Kennern des jeweils ersten Ringknotens im Ringsegment;
Figur 19 die lokale Änderung der Farbe für die Control-Plane;
Figur 20 die Datenübertragung mit Farben für das Szenario gemäß Figur 14 und 15; und
Figur 21 Rückspeiseschutz über CB für das Szenario gemäß Figur 14 und 15.

In den Figuren sind gleiche Elemente mit gleichen Bezugszeichen versehen.

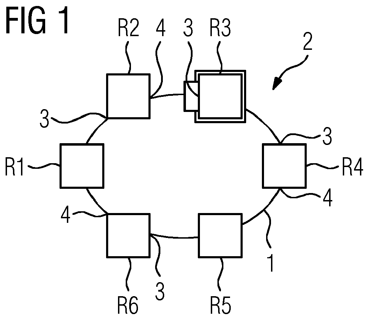

Die Figur 1 zeigt in rein schematischer Teildarstellung ein industrielles Ethernet-basiertes Netzwerk mit mehreren Netzwerkknoten in Form von Bridges R1-R6. Das Netzwerk ist ein TSN-Netzwerk und sämtliche Netzwerkknoten R1-B10 unterstützen TSN-Standards, insbesondere die Reservierung von Netzwerkressourcen für eine Echtzeit-Datenübertragung mit garantierter Latenz.

Wie man erkennt, sind die Knoten R1-R6 derart über Kabel/Links 1 miteinander verbunden, dass eine ringförmige Netzwerktopologie erhalten wird. Es ergibt sich ein Ringsegment 2, welches einen Teil des oder das Netzwerk bildet. Die Netzwerkknoten R1-R6 werden entsprechend im Folgenden als Ringknoten R1-R6 bezeichnet. Jeder Ringknoten R1-R6 hat genau zwei an dem Ringsegment 2 teilnehmende Ringports 3, 4. Es sei angemerkt, dass der Ausdruck Ringsegment 2 insbesondere im Lichte der Möglichkeit verwendet wird, dass nur ein Teil eines Netzwerkes durch eine Gruppe von ringförmig verbundenen Knoten gebildet wird.

Die gezeigte Ringtopologie wurde im Rahmen des hier beschriebenen Beispiels auf Basis von MRP (Media Redundancy Protocol) aufgebaut. In diesem Zusammenhang sei auch auf die auf die Anmelderin zurückgehende Veröffentlichung mit dem Titel "Aufbau einer Ring-Topologie auf Basis "MRP" SCALANCE X, SIMATIC S7" verwiesen, die unter https://support.industry.siemens.com/cs/ww/de/view/109739614 erhältlich ist.

MRP liefert in an sich bekannter Weise die Kennzeichnung der Ringports 3, 4 jedes Ringknotens R1-R6 und eine schleifenfreie Topologie.

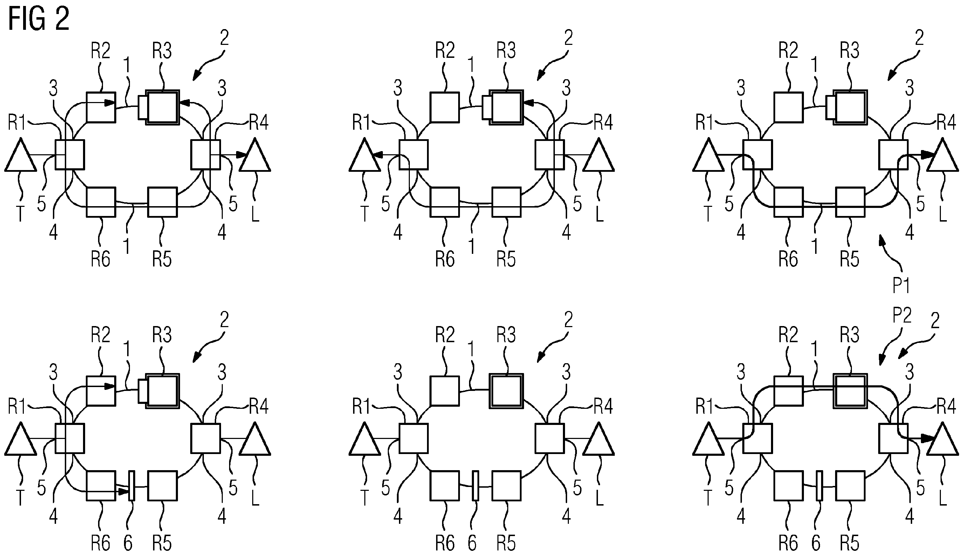

Über das Ringsegment 2 können Datenpakete zwischen an dem Netzwerk teilnehmenden Geräten, etwa Endgeräten, ausgetauscht werden. Solche sind in Figur 1 nicht dargestellt, können jedoch der Figur 2 entnommen werden. Konkret sind - rein beispielhaft - zwei Endgeräte T, L gezeigt, von denen eines T Datenpakete über eine geschützte Verbindung als TSN-Stream an ein weiteres L schicken möchte. Entsprechend stellt das eine Endgerät T einen Sender bzw. Talker des Streams dar und das andere Endgerät L einen Empfänger bzw. Listener.

Der Talker T ist an den Ringknoten R1 und der Listener L an den Ringknoten R4 angeschlossen. Konkret sind die beiden Geräte T, L jeweils mit einem nicht an dem Ringsegment 2 teilnehmenden Port 5 (der auch als Nicht-Ringport bezeichnet werden kann) des jeweiligen Ringknotens R1, R4 verbunden. Jeder der Ringknoten R1-R6 weist einen oder mehrere solche nicht an dem Ringsegment 2 teilnehmende Ports 5 auf. In den Figuren ist beispielhaft nur jeweils ein nicht am Ringsegment 2 teilnehmender Port 5 von R1 und R4 dargestellt.

Das Endgerät T stellt vorliegend eine speicherprogrammierbare Steuerung dar, von der Datenpakete an das Endgerät L, bei dem es sich vorliegend um ein IO-Gerät handelt, zu übermitteln sind. Das IO-Gerät L umfasst Aktoren bzw. ist mit solchen verbunden, über die auf einen in den Figuren nicht dargestellten industriellen Prozess einzuwirken ist. Die Aktoren müssen in an sich bekannter Weise zyklisch Stellwerte erhalten, so dass eine zyklische Übertragung von Datenpaketen mit entsprechendem Nutzdateninhalt von dem Endgerät T an das Endgerät L zu erfolgen hat.

Es sei angemerkt, dass natürlich weitere Endgeräte, insbesondere auch an nicht am Ringsegment 2 teilnehmenden Ports 5 der weiteren Knoten R2, R3, R5, R6 angeschlossen sein bzw. werden können, zwischen denen ebenfalls Daten ausgetauscht werden sollen.

Durch MRP/HRP sind in industriellen Netzwerken große Ringe mit vielen Teilnehmern möglich, insbesondere mit MRP bis zu 50 und gemäß HRP bis zu 100 Geräte.

Die Ringtopologie ermöglicht Redundanz, da für jedes Paar von Sender und Empfänger, die über das Ringsegment 2 miteinander verbunden sind, gilt, dass zwei redundante Pfade bzw. Wege zur Verfügung stehen. Für eine Übertragung zwischen den Endgeräten T und L beispielsweise steht der in Figur 2 "obere" Weg bzw. Pfad P2 über R1, R2, R3 und R4 oder der "untere" Weg bzw. Pfad P1 über R1, R6, R5 und R4 zur Verfügung.

Ein ausgewählter Ringmanager, welcher vorliegend von dem Ringknoten R3 gebildet wird bzw. dessen Funktion der Ringknoten R3 bildet, "öffnet" den Ring dabei gezielt und verhindert einen Kreis von Telegrammen/Datenpaketen und dass Duplikate den Empfänger, vorliegend L, erreichen. Dass der Ring "geöffnet" wird, bedeutet insbesondere, dass der Ringmanager R3, der in den Figuren 1 und 2 durch eine zusätzliche Umrandung hervorgehoben ist, die an einem seiner beiden Ringports 3 ankommenden Telegramme bzw. Pakete nicht über seinen anderen Ringport 4 weiterleitet. Die Funktion aller Einzelverbindungen 1 wird durch Testtelegramme ständig vom Ringmanager R3 geprüft. Im Falle einer fehlerhaften Verbindung bleiben die zyklischen Testtelegramme aus und der Ringmanager R3 schließt den zuvor bei ihm geöffneten Ring, um die Kommunikation mit dem durch den Fehler entkoppelten Teil des Ringes wiederherzustellen.

In der Figur 1 ist der Ringport 3 von R3 markiert, um die "Öffnung" an dieser Stelle durch den Ringmanager R3 zu verdeutlichen.

Generell kann der Ablauf der Datenübertragung gemäß den in der Figur 2 dargestellten Schritten erfolgen. Die Telegramme eines Netzwerkteilnehmers, hier T, werden zuerst in beide Richtungen im Netzwerk gesendet, dies wird "Fluten" genannt und ist in der Figur 2 oben links über einen Pfeil angedeutet. Erst, wenn das Ziel L der Datenübertragung bekannt ist, beispielsweise dadurch, dass eine Übertragung vom Zielgerät L im Netzwerk ebenfalls "geflutet" wurde, wie in Figur 2 oben, Mitte angedeutet, wird die Adresse des Zielgerätes L gelernt und es erfolgt eine gezielte Weiterleitung zum Empfänger L im Netzwerk (Figur 2 oben rechts).

Tritt ein Fehler 6 auf, was in Figur 2 unten links für den R5 und R6 verbindenden Link 1 der Fall ist, kann die Weiterleitung in die andere Richtung erforderlich werden (in Figur 2 unten rechts dargestellt), weshalb eine Erweiterung für das Löschen von gespeicherten Adressen erforderlich ist. Diese Erweiterung ist in MRP bzw. HRP vorhanden.

Um eine gesichert Übertragung der Datenpakte von dem Endgerät T an das Endgerät L, insbesondere mit garantierter Latenz zu gewährleisten, sind an beteiligten Netzwerkknoten R1-R6 für die Übertragung Übertragungsressourcen zu reservieren, wie aus dem Stand der Technik, u.a. diversen TSN-Standards, hinlänglich vorbekannt. Die unter Nutzung reservierter Ressourcen periodisch übertragenen Datenpakete können auch als Stream bzw. TSN-Stream bezeichnet werden.

Gemäß der vorliegenden Erfindung ist vorgesehen, bei der Reservierung von Ressourcen für den Stream zwischen T und L beide Wege im Netzwerk, vorliegend Ringsegment 2 zu reservieren. Dadurch stehen für die Übertragung im Fehlerfall 6 auf einem der Wege (in Figur 2 der "untere" Weg über R1, R6, R5 und R4) auch genügend Ressourcen, etwa Bandbreite, für die Übertragung auf dem neuen Weg (in der Figur 2 der "obere" Weg über R1, R2, R3 und R4) zur Verfügung und die Umschaltung kann lokal sofort ausgelöst werden, ohne einen vollständigen Ablauf der Reservierung auf den neuen Pfad abzuwarten.

Für die Reservierung von Seamless Redundancy (Verwendung von IEEE 802.1 CB) wurde die Berechnung von zwei disjunkten Bäumen eingeführt, denen die Farben Rot und Blau zugeordnet sind.

In einem Ring bzw. dem in den Figuren dargestellten Ringsegment 2 würde dies den beiden Drehrichtungen, konkret einmal im Uhrzeigersinn und einmal gegen diesen entsprechen. Hierdurch wird eine Reservierung auf mehreren Wegen für einen Stream möglich.

Eine Reservierung für "Rot" und "Blau" kann in jedem Ringknoten R1-R6 auf den beiden am Ringsegment 2 teilnehmenden Ringports 3, 4 im Ring lokal wie zwei Reservierungen betrachtet werden. Für die Reservierung wird dabei erfindungsgemäß dem Umstand des Rings mit den als solchen lokal bekannten bzw. gekennzeichneten Ringports 3, 4 ausgenutzt.

Ein Ringknoten R1-R6 kann dabei eine beliebige lokale Zuordnung von "Rot" und "Blau" an die beiden Ringports 3, 4 eines Ringsegmentes 2 vornehmen. Die Reservierungen von Endgeräten wie T und L, für welche in an sich bekannter Weise ein Reservierungsprotokoll wie SRP (Stream Reservation Protocol) zum Einsatz kommen kann, können im Netzwerk mit der jeweiligen lokalen Farbe betrachtet werden.

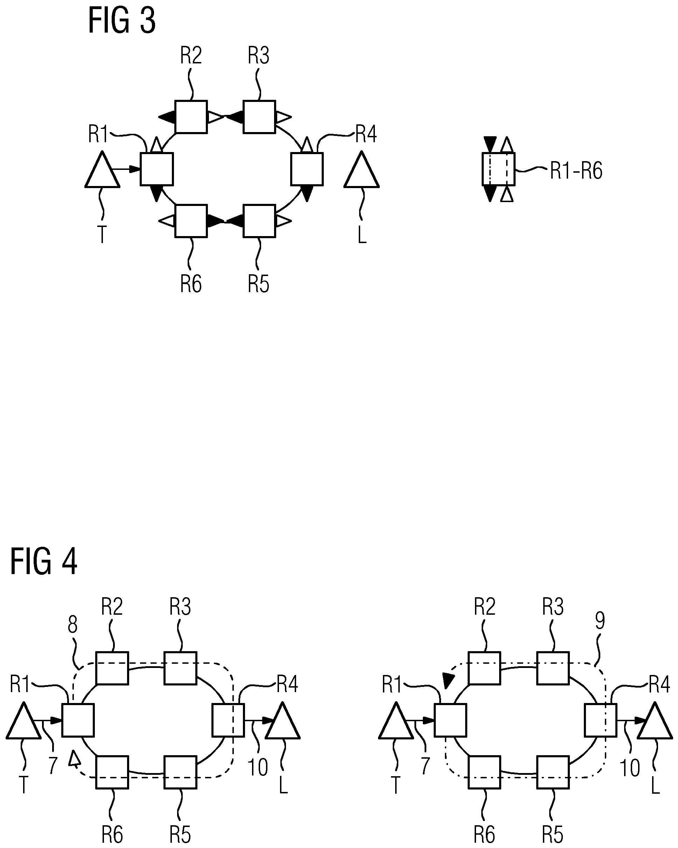

Dies ist - rein schematisch und beispielhaft - in Figur 3 dargestellt. In dieser ist die Farbe "Rot" durch Pfeilspitzen mit und die Farbe "Blau" durch Pfeilspitzen ohne Füllung an den Ringports 3, 4 dargestellt.

Für die Stream- bzw. Ressourcen-Reservierung kann in an sich bekannter Weise von dem den Stream-Initiator darstellenden Teilnehmer, vorliegend dem Talker T, eine Ankündigungsnachricht für den Stream herausgegeben und diese im Netzwerk verteilt werden. Im Rahmen des hier beschriebenen Ausführungsbeispiels gibt der Talker T in an sich bekannter Weise einen Talker Advertise heraus und Endgeräte, die an dem damit angekündigten und beschriebenen Stream teilnehmen möchten, können sich über eine Teilnahmenachricht daran anmelden. Vorliegend meldet sich der Listener L an dem Stream durch senden einer Listener Join bzw. Listener Ready an.

Dabei wird der vom Talker T herausgegeben Talker Advertise 7, wenn er das Ringsegment 2 an einem nicht an dem Ringsegment 2 teilnehmenden Port 5 des den Einspeise-Ringknoten des Ringsegmentes 2 für diese Talker Advertise darstellenden Ringknotens, der in dem Szenario gemäß den Figuren 1 bis 3 durch R1 gegeben ist, erreicht, von dem Ringknoten R1 über seine beiden Ringports 3, 4 weiterleitet, und in dem Ringsegment 2 in beide Richtungen - einmal in den und einmal gegen den Uhrzeigersinn - von Ringknoten R1-R6 zu Ringknoten R1-R6 weitergeleitet und von den Ringknoten R1-R6 in an sich bekannter Weise verarbeitet.

Das Verdoppeln und Weiterleiten des Talker Advertises 7 ist in der Figur 4 angedeutet und zwar auf der linken Seite für die Richtung im Uhrzeigersinn und auf der rechten Seite für die Richtung gegen diesen.

Dabei ist mit einem Pfeil 8 mit gestrichelter Linie die Ausbreitung der Advertise Information für die Farbe "Blau" (links) und mit einem Pfeil 9 mit strichpunktierter Linie die Ausbreitung der Advertise Information für die Farbe "Rot" dargestellt.

Beim Verlassen des Ringsegmentes 2 wird vorteilhafter Weise eine gemeinsame Beschreibung bzw. ein gemeinsamer Talker Advertise weitergegeben, was in der Figur 4 jeweils durch einen Pfeil 10 mit durchgezogener Linie von dem letzten Ringknoten R4 zum Listener L angedeutet ist. Die gemeinsame Beschreibung beider Pfade enthält dabei die zusammengefasste Information beider Wege, insbesondere die größere maximale Latenz-Information von beiden Wegen.

Es sei angemerkt, dass die Richtungen für "Blau" und "Rot" in Figur 4 denjenigen entsprechen, die in Figur 3 für den Einspeiser, also R1, eingezeichnet sind (für "Blau" stehen die ungefüllten Pfeilspitzen in Figur 3 und der Pfeil mit gestrichelter Linie in Figur 4 und für "Rot" die gefüllten Pfeilspitzen bzw. der Pfeil mit strichpunktierte Linie). Für Endgeräte, die an den verbleibenden Knoten R2-R6 als Talker angeschlossen würden bzw. sind (in Figur 3 nicht dargestellt), würden sich die - nur in Figur 3 - markierten Richtungen ergeben.

Bei TSN kann die Farbkennzeichnung für zwei Pfade in der Reservierung durch die Verwendung einer getrennten VLAN ID in der Stream Beschreibung, insbesondere dem Talker Advertise, erfolgen. Diese kann auch in der Data-Plane verwendet werden, um den Weiterleiteweg zu bestimmen. Die Kennzeichnung in den Datenpaketen und der Stream Beschreibung, also dem vom Talker T abgesendeten Talker Advertise, muss hier nicht erfolgen. Die interne Verarbeitung kann mit rein lokalen VLAN IDs arbeiten, um die beiden Farben intern abzubilden.

Bei der Datenübertragung, also der Weiterleitung der Datenpakete mit Nutzdateninhalt im Anschluss an die erfolgreiche Einrichtung des Streams, kann eine Adresse und ein VLAN verwendet werden. Dadurch ist auf der Data-Plane kein Unterschied der verwendeten Farbe der Reservierung erkennbar, alle Daten werden im Ringsegment 2 mit der gleichen Kennung weitergeleitet - die Reservierungen könnten durch unterschiedliche Farben entstanden sein.

Die Verwendung von unterschiedlichen Kennern in den Talker Advertise Nachrichten bietet dabei einen Vorteil bei der Diagnose, um die Advertise Nachrichten der Reservierung aus den beiden Drehrichtungen im Ringsegment 2 unterscheiden zu können. Rein intern können beispielsweise auch die Ringport-Nummern verwendet werden (Empfang über ersten oder zweiten Ringport 3, 4) - dabei sind die Talker Advertise Nachrichten nicht durch einen unterschiedlichen Kenner unterscheidbar. Weiterhin werden Fehlermeldungen zuverlässig vermieden, die ansonsten auftreten können, wenn eine Ankündigungsnachricht mit gleicher Stream ID und Stream DA ein zweites Mal von einem Knoten R1-R6 empfangen wird.

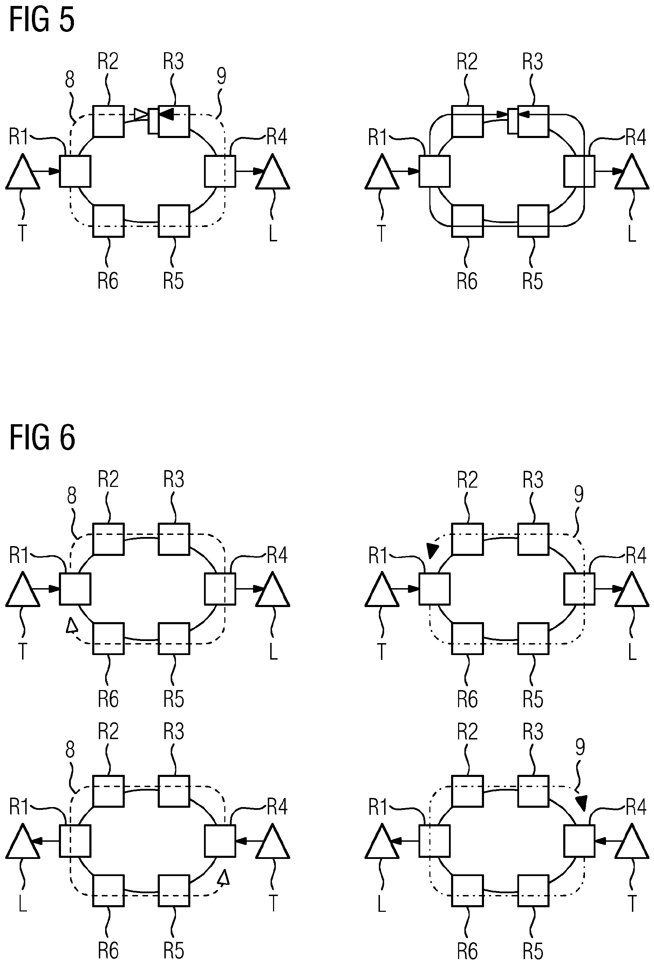

Durch den Ringmanager R3 ist die (im Anschluss an die Stream-Einrichtung erfolgende) Übertragung der Streamdaten dabei auf einem Pfad im Netzwerk, gemäß den Figuren 1 bis 3 auf dem "oberen" Pfad P2, unterbrochen. Dies ist nochmals in der Figur 5 für normale Daten veranschaulicht, die links mögliche aktive Pfade mit Pfeilen mit gestrichelter bzw. strichpunktierter Linie für die Farben blau und rot und rechts mit durchgezogener Linie die Datenübertagung zeigt. So wird gewährleistet, dass immer nur über einen Pfad Daten empfangen werden.

Durch die beliebige lokale Zuordnung einer Farbe kann sich für jeden Stream "aus Sicht" von jedem Ringknoten eine eigene Drehrichtung für die lokale "rote" und "blaue" Reservierung im Netzwerk ergeben, was in der Figur 6 rein schematisch und beispielhaft angedeutet ist. Dargestellt ist die Drehrichtung für eine bidirektionale Verbindung. Es wählt der Ringknoten R1 am Talker T die interne Farbe, welche dann bei der Weitergabe des Talker Advertises 7 im ganzen Ringsegment 2 als Kenner verwendet wird. Gleiches gilt entsprechen für den Talker T im unteren Teil in Figur 6, dort wählt jeweils der Ringknoten R4 die Farbe für den Talker Advertise.

In Figur 6 sind oben die Richtungen "aus Sicht" des Ringknotens R1 gezeigt und unten die Richtungen "aus Sicht" von R4, jeweils links für die blauen Reservierungen durch einen Pfeil mit gestrichelter Linie und rechts für die roten mit durch einen Pfeil mit strichpunktierter Linie. Es sei angemerkt, dass für Figur 6 unten, welche die Richtungen "aus Sicht" von R4 zeigen, zu einem Szenario korrespondiert, in dem das mit R4 verbundene Endgerät (auch) einen Sender, also Talker bildet und das an R1 angeschlossene (auch) einen Empfänger also Listener, weshalb die Endgeräte in Figur 6 unten umgekehrt zu Figur 6 oben mit "T" und "L" versehen sind.

Alternativ dazu, dass ein Kenner, insbesondere eine Farbe verwendet wird, die durch den ersten Knoten R1 am Talker T festgelegt und dann weitergegeben wird, können auch rein interne Kenner der einzelnen Ringknoten R1-R6 zum Einsatz kommen. Dann kann die Ankündigungsnachricht ohne Kenner über die beiden Ringports 3, 4 des Einspeisers R1 weitergeleitet werden. Dann ist zweckmäßiger Weise vorgesehen, dass jeder Ringknoten R1-R6, der eine Ankündigungsnachricht 7 (ohne Kenner) an einem Ringport 3, 4 empfängt, lokal einen Kenner vergibt. Beispielsweise kann über einen Ringport 3, 4 empfangenen Ankündigungsnachrichten 7 dann die Nummer desjenigen Ringports zugewiesen werden, an dem die Nachricht empfangen wurde. Diese bzw. darin enthaltene Informationen werden dann zweckmäßiger Weise unter bzw. zusammen mit dem lokal zugewiesenen Kenner verarbeitet.

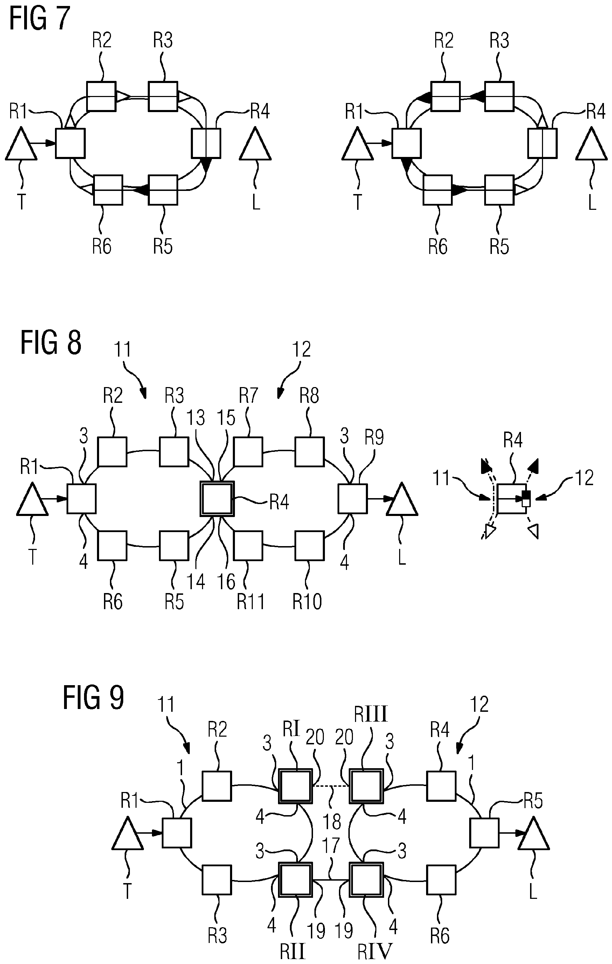

Bei der Verwendung von rein internen Kennern/Farben durch die einzelnen Ringknoten R1-R6 kann sich für einen Stream dann die lokale Farbe in jedem Ringknoten R1-R6 ändern, was - wiederum nur schematisch und beispielhaft - in Figur 7 veranschaulicht ist. In der Figur 7 ist die Farbe "Rot" erneut durch Pfeilspitzen mit und die Farbe "Blau" durch Pfeilspitzen ohne Füllung dargestellt. Dabei wird links der Weg der in dem Ringknoten R1 lokalen blauen Advertise- und rechts der Weg der in dem Ringknoten R1 lokalen roten Advertise-Information im Netzwerk nachvollzogen. Die intern Farbzuordnung in den Knoten R1-R6 sind nur beispielhaft und können von den Knoten R1-R6 intern beliebig vergeben werden. Dadurch wird im Ringsegment 2 die lokale Farbe beim Empfang der Advertise Information beliebig zugeordnet und ändert sich dadurch im Verlauf der Ausbreitung im Ringsegment 2.

Unabhängig davon, ob Kenner in die Ankündigungsnachrichten eingefügt oder lokal vergeben werden, wird zweckmäßiger Weise, wenn eine Ankündigungsnachricht 7 an einem Ringport 3, 4 empfangen wird, gespeichert bzw. konfiguriert wird, dass die spätere Datenweiterleitung über den anderen Ringport zu erfolgen hat.

Ein erheblicher Vorteil der lokalen Kennzeichnung der Reservierung mit Kennern, insbesondere Farben, besteht darin, dass die Zustände für beide Richtungen des Ringsegmentes 2 und Fehlermeldungen getrennt voneinander betrachtet werden können, was u.a. zu Diagnosezwecken vorteilhaft ist. Es sei jedoch betont, dass diese vorteilige Kennzeichnung nicht zwingend erforderlich ist, sondern vielmehr auch ohne eine Kennzeichnung über Farben oder auch andere Kenner ausgekommen werden kann.

Die intern gespeicherte Information entspricht dann einer Information für einen Kenner - selbst wenn dieser nur lokal vergeben wurde.

Insbesondere für den Fall, dass für die eigentliche Übertragung von Datenpaketen vom Talker T zum Listener L im Anschluss an eine erfolgreiche Stream-Einrichtung nur eine VID in der Data-Plane für beide Wege/Pfade genutzt wird, ist eine Einrichtung mit einer rein lokalen Portfarbe möglich.

Sofern in der Data-Plane zwei VIDs für die zwei Farben verwendet werden, kann es vorteilhaft sein, eine "Drehrichtung" in dem oder jeweiligen Ringsegment 2 für alle Ringknoten R1-R6 zu haben, wodurch alle Ringknoten R1-R6 die Farben der gleichen Drehrichtung des Ringsegmentes 2 gleich verwenden.

Da ein MRP Ringmanager R2, wie vorstehend bereits angemerkt, zyklisch Testtelegramme im Ring aussendet, die durch alle Ringteilnehmer kreisen, kann beispielsweise durch eine Information in den Testtelegrammen die Drehrichtung für alle Ringknoten R1-R6 definiert werden und damit die Farbe für die Ringports 3, 4 bestimmt bzw. festgelegt werden.

Damit einerseits eine Reservierung von Ressourcen, insbesondere auf die vorbekannte, standardgemäße Weise (z.B. gemäß SRP) auf zwei Pfaden in einem oder mehreren Ringsegmenten 2 auf einfache Weise möglich ist, und gleichzeitig verhindert wird, dass die dafür in beide Richtungen verbreitete Stream-Ankündigungsnachricht 7 endlos in beide Richtungen kreist, ist erfindungsgemäß eine zusätzliche, einfache Überprüfung vorgesehen.

Konkret wird von jedem oder für jeden Ringnoten R1-R6, der eine Ankündigungsnachricht 7 an einem seiner beiden Ringports 3, 4 empfängt, zunächst überprüft, ob dieser der Einspeise-Ringknoten des (ggf. jeweiligen) Ringsegmentes 2 für die Ankündigungsnachricht 7 für diesen Stream war. Ist dies der Fall, hat die Ankündigungsnachricht 7 das (ggf. jeweilige) Ringsegment 2 in entsprechender Richtung bereits einmal vollständig durchlaufen, also alle Ringknoten R1-R6 des (ggf. jeweiligen) Ringsegmentes 2 in entsprechender Richtung einmal erreicht und sollte nicht weiter kreisen. Entsprechend leitet derjenige Ringknoten, der der Einspeiser war, in dem Szenario gemäß den Figuren 1 bis 3 also R1, die Ankündigungsnachricht 7 als einziger nicht über den anderen Ringport 3, 4 weiter, wenn er sie an einem Ringport 3, 4 empfängt. Durch diese zusätzliche Überprüfung, die sich auf einfache Weise lokal in den Netzwerkknoten R1-R6 implementieren lässt, kann ein endloses Kreisen zuverlässig vermieden werden. Die Notwendigkeit, für eine gegebene Topologie vorab schleifenfreie Bäume zu ermitteln, entlang derer die Ankündigungsnachricht gezielt verbreitet, wie es in der WO 2019/001718 A1 vorgesehen ist, kann somit entfallen.

Da es für jedes Ringsegment 2 nur zwei Ringports 3, 4 geben kann und die Weiterleitung damit jeweils lokal am andere Ringport 3, 4 erfolgen kann, ist die "Farbe" nur lokal für die Reservierung wichtig. Das Prinzip der Reservierung entspricht jedoch dem von zwei eingerichteten Wegen im Netzwerk.

Es sei angemerkt, dass für den Fall, dass der Talker Advertise mit einer Kennung versehen wird (entweder mit einem durch den ersten Knoten R1 bestimmten Kenner oder auch in jedem einzelnem Knoten R1-R6 durch einen Kenner, der dem Empfangs- oder Sendeport zugeordnet sein kann), die Überprüfung, ob ein Ringknoten R1-R6 den Einspeiser darstellt, erfolgen kann, in dem der jeweilige Ringknoten R1-R6 prüft, ob er eine an einem Ringport 3, 4 empfangene Talker Advertise Nachricht zuvor bereits ohne einen Kenner empfangen hat, was dann damit gleichbedeutend ist, dass sie zuvor an einem Nicht-Ringport empfangen wurde.

Zusätzlich zu der Weiterleitung der Talker Advertise Nachricht im Ringsegment 2 in beide Richtungen wird ein Talker Advertise, der von einem Ringknoten R1-R6 an einem (beliebigen) Port empfangen wurde, auch an sämtliche weiteren, nicht an dem Ringsegment 2 teilnehmende Nicht-Ringports 5 weitergegeben, wobei der Empfangsport jedoch ausgelassen wird. So können an dem Netzwerk - an beliebiger Stelle - teilnehmende Endgeräte über angekündigte Streams informiert werden.

Dabei kann vorgesehen sein, dass bei der Weitergabe der Information von Bridges mit Ringport 3, 4 die Information direkt an alle anderen Nicht-Ringports 5 weitergegeben wird. Dadurch kann aber ein Update der Information notwendig werden, sobald die Talker Advertise Information über den jeweils zweiten Ringport 3, 4 (aus der anderen Richtung) empfangen wird. Besonders die Accumulated Latency kann über den "langsameren" Ausbreitungsweg größer sein.

Es sei angemerkt, dass die Weitergabe des Talker Advertise 7 auf dem späteren schnellen Übertragungsweg länger dauern kann und unabhängig von der benötigten Zeit für die Übertragung der Daten ist, da die Information durch das Reservierungsprotokoll empfangen, ausgewertet, verändert und erst dann weitergegeben wird. Die dafür benötigte Zeit ist abhängig von der Rechenleistung des Knotens - die Weiterleitung der Stream-Datenpakete erfolgt vorteilhaft in Hardware und ist deutlich schneller als die Weiterleitung der Talker Advertise Information.

Um die Notwendigkeit von Updates zu vermeiden, kann auch vorgesehen sein, dass ein Ringknoten R1-R6, der einen Talker Advertise an einem Ringport 3, 4 empfängt, diesen zunächst nur über den anderen Ringport 3, 4, nicht jedoch über Nicht-Ringports 5 weiterleitet, sondern abwartet, bis der Talker Advertise auch aus der anderen Richtung, also an seinem zweiten Ringport 3, 4 eingegangen ist und ihn dann über Nicht-Ringports 5 insbesondere an Endgeräte weitergibt.

Selbstverständlich ist es möglich, dass ein Netzwerk mehr als ein Ringsegment 2 umfasst durch zwei oder auch mehr Ringsegmente 2 gebildet wird. In Figur 8 ist rein beispielhaft und schematisch ein Netzwerk mit zwei miteinander gekoppelten Ringsegmenten 11, 12 dargestellt. Weiterhin zu erkennen sind - beispielhaft - zwei Endgeräte, von denen wieder einen Talker T und der andere einen Listener L darstellt.

Zu dem aus Sicht des Talkers T ersten, in Figur 8 linken Ringsegment 11 gehören die Ringknoten R1, R2, R3, R4, R5 und R6. Zu dem Ringsegment 12 gehören die Ringknoten R7, R8, R9, R10, R11 und auch der Ringknoten R4, der entsprechend einen Ringknoten sowohl des einen als auch des anderen Ringsegmentes 11, 12 darstellt. Die Ringknoten R1, R2, R3, R5, R6, R7, R8, R9, R10 und R11 weisen jeweils zwei an dem jeweiligen Ringsegment 11, 12 teilnehmende Ringports 3, 4 und einen oder mehrere an keinem Ringsegment teilnehmenden Ports auf. Der Ringknoten R4 weist zwei zu dem Segment 11 gehörige erste Ringports 13, 14 und zwei zu dem zweiten Segment 12 gehörige zweite Ringports 15, 16 sowie einen oder mehrere zu keinem Ringport gehörige Ports auf. Es sei angemerkt, dass die Ringports 13 und 14, die im ersten Segment 11 liegen, gleichzeitig Nicht-Ringports des zweiten Segmentes 12 bzw. "aus dessen Sicht" sind, und die Ringports 15 und 16 , die im zweiten Segment 12 liegen gleichzeitig Nicht-Ringports des ersten Segmentes 11 bzw. "aus dessen Sicht" sind.

Der Ringknoten R4, der die beiden Segmente 11, 12 koppelt, wird im Folgenden als Koppel-Ringknoten bezeichnet. Dieser stellt auch den Ringmanager dar.

Bei einem Ring-Manager mit mehreren Ringen bzw. Ringsegmenten 11, 12 erfolgt ein logisches "verlassen" des ersten Ringes/Ringsegmentes 11 und eine erneute Weitergabe der ersten Stream-Beschreibung, vorliegend des Talker Advertises, wie zu einem Endgerät aus Sicht von Ringsegment 11 und wie von einem Endgerät in das gekoppelte weitere Ringsegment 12. Dies ist in der Figur 8 rechts angedeutet.

Durch die Weitergabe der Beschreibung wird die Reservierung im zweiten Ringsegment 12 unabhängig von der des ersten Ringsegmentes 11 durchgeführt.

In den beiden Ringsegmenten 11, 12 wird der Talker Advertise - genau wie vorstehend für das Beispiel nur eines Segmentes 2 beschrieben - jeweils in beide Richtungen weitergegeben und von den Ringknoten R1-R11 verarbeitet.

Für das erste Ringsegment 11 stellt R1 den Einspeise-Ringknoten dar. Für das zweite Ringsegment R4. Für beide Segmente 11, 12 gilt, dass jeder Ringknoten, der einen Talker Advertise an einem Ringport 3, 4 bzw. 13, 14, 15, 16 empfängt, prüft, ob er diese Nachricht bereits zuvor über einen nicht an dem jeweiligen Segment 11, 12 teilnehmenden Port empfangen hat. Für beide Segmente 11, 12 gilt, dass der Ringknoten mit der Einspeiser-Stellung R1, R4 den Advertise nicht mehr weitergibt, wenn er diesen an einem Ringport 3, 4, 15, 16 empfängt, da der Ring dann jeweils ein Mal komplett in die eine bzw. die andere Richtung durchlaufen wurde und ein endloses Kreisen verhindert wird.

Alternativ dazu, dass zwei Ringsegment 11, 12 (oder im Falle von mehr als zwei Segmenten 11, 12 jeweils zwei Segmente 11, 12) über einen Koppel-Ringknoten R4 miteinander verbunden sind, kann auch eine Standby-Kopplung mit einer aktiven und einer passiven Koppelstrecke 17, 18 vorgesehen sein, was schematisch und beispielhaft in Figur 9 veranschaulicht ist.

Für die Kopplung mit Standby gibt es speziell konfigurierte Verbindungen an Koppelknoten. Durch eine Überwachung der Koppelstrecken 17, 18, die auch als des Koppellinks bezeichnet werden können, und der automatischen Aktivierung einer passiven zweiten Strecke (Standby) kann eine schnelle Umschaltung erfolgen. Die Reservierung der Ressourcen unterscheidet sich dabei zumindest im Prinzip nicht von derjenigen mit CB (insbesondere mit IEEE 802.1 CB) - die Datenübertragung ist jedoch deutlich einfacher.

Die Ringknoten RI, RIII mit Standby Links 18 arbeiten zweckmäßiger Weise in der Rolle "Ringknoten" für die Weitergabe der Information, also des Talker Advertise 7 über den Standby Link 18. Die Information des Talker Advertise 7 wird erst über den Standby-Link 18 weitergegeben, wenn die Information aus beiden Ringrichtungen (von beiden Ringports 3, 4) empfangen wurde. Beim Empfang der Information über einen Aktiv-Koppel-Port 19 bzw. einen Passiv-Koppel-Port 20 (siehe Figur 9) wird die Information nur über einen Ringport 3, 4 weitergegeben (aktiver Port) bzw. am Passiv-Koppel-Port 20 nur zwischengespeichert und erst mit dem Empfang des ersten Talker Advertise 7 von einem Ringport 3, 4 verteilt. Dadurch kann eine gezielte Ausbreitung von Ringsegment 11 nur zu Ringsegment 12 und nicht zurück über die Standby-Kopplung 18 erreicht werden. Die von der Reservierung notwendige Information ist dabei die Portrolle von der Standby-Kopplung und der Zustand der Koppelstrecken 17, 18 - passiv oder aktiv.

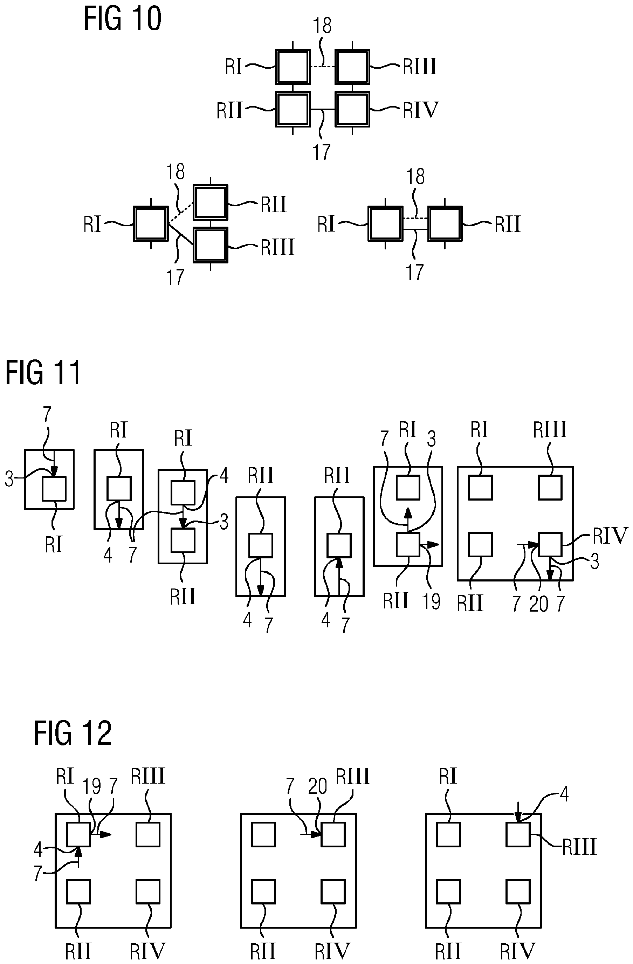

In den Figuren 11 bis 13 sind die Abläufe für die Reservierung für eine Konstellation mit Standby-Link 18, wie in Figur 9 dargestellt, veranschaulicht.

Die Figur 11 zeigt dabei von links nach rechts insgesamt sieben Schritte, konkret, dass ein Talker Advertise 7, der in den Figuren 11 bis 13 jeweils durch einen Pfeil angedeutet ist, den Koppel-Ringknoten RI an einem Ringport 3 im ersten Ringsegmentes 11 erreicht, und der Knoten RI diesen im zweiten Schritt über seinen anderen Ringport 4 weiterleitet. Der Talker Advertise 7 wird entsprechend von dem Koppel-Ringknoten RII an dem Ringport 3 empfangen und auch dieser leitet ihn im Ringsegment 11, also über seinen anderen Ringport 4 weiter. Der Koppel-Ringknoten RII empfängt dann im nächsten Schritt den zweiten Talker Advertise 7 aus der anderen Richtung über seinen anderen Ringport 4 und gibt ihn sowohl über seinen Ringport 3 in Richtung RI als auch über seinen Aktiv-Koppel-Port 19 in Richtung RIV weiter. Im letzten in Figur 11 dargestellten Schritt empfängt RIV den Talker Advertise 7 an seinem Aktiv-Koppel-Port 20. Der Knoten RIV gibt den Talker Advertise 7 nur einen seiner beiden im Ringsegment 12 liegenden Ringports 3, 4 weiter, vorliegend über den Ringport 3 und nimmt die "Einspeiser-Rolle" für das zweite Ringsegment 12 ein.

In der Figur 12 ist der weitere Ablauf für den "normalen" Fall gezeigt, nämlich dass die Information, also der Talker Advertise 7 von RII zu RI schneller gelangt als über RII, RIV, das Segment 12 und RIII. Dann gilt, dass RI den zweiten Talker Advertise 7 an seinem Ringport 4 empfängt und über seinen Passiv-Koppel-Port in Richtung RIII weitergibt, was in Figur 12 ganz links dargestellt ist. Der Koppel-Ringknoten RII empfängt den Talker Advertise 7 über seinen Passiv-Koppel-Port 20 (zweiter Schritt in Figur 12). Der Knoten RIII speichert die Information nur zwischen, gibt den Talker Advertise 7 jedoch nicht weiter. Erst, wenn RIII über einen seiner Ringports, vorliegend den Port 4 den Talker Advertise 7 ein zweites Mal empfangen hat, wird der Talker Advertise 7 über beide Ringports 3, 4, also im Ringsegment 12 weitergegeben und zusätzlich wird die am Passiv-Koppel-Port 20 empfangene und gespeicherte Information bzw. ein Update des Talker Advertise 7 weitergegeben.

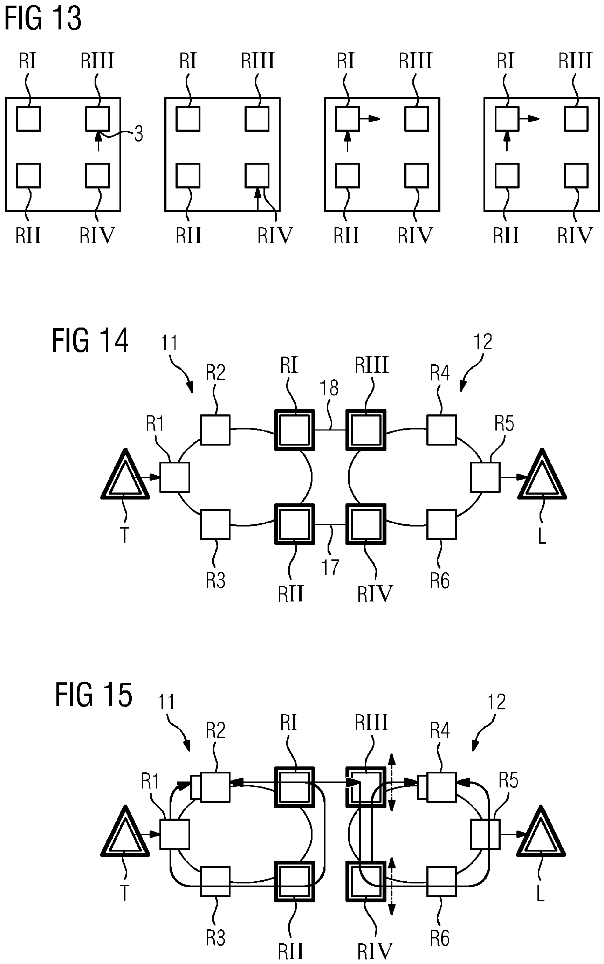

Der Ablauf für die Situation, dass die Information über die Strecke RII, RIV, das Segment 12 und RIII schneller ist, ist in der Figur 13 skizziert. Hier gilt, dass der Koppel-Ringknoten RIII noch keinen Talker Advertise 7 für einen Stream über seinen Passiv-Koppel-Port 20 empfangen hat, wenn dieser über einen seiner Ringports 3, 4 ankommt. Dies ist in Figur 13 ganz links - beispielhaft für einen Empfang über den Port 3 - angedeutet.

Ein zusätzlicher Standby-Link 18 kann dabei erhalten werden, indem zwei, drei oder vier Koppel-Ringknoten (in Figur 9 mit RI-RIV bezeichnet) verwendet und sowohl über einen aktiven 17 als auch einen passiven Link 18 miteinander verbunden werden. Dies ist schematisch in Figur 10 dargestellt. Es sei nagemerkt, dass in den Figuren 8, 9 und 10 die Koppel-Ringknoten R4, RI-RIV jeweils durch doppelte Umrandung hervorgehoben sind.

Der Talker Advertise 7 wird von dem Knoten RIII über seinen anderen Ringport 4 weitergegeben. Was eine Weitergabe über den Passiv-Koppel-Port 20 angeht, wird jedoch auf die Ankunft des zweiten Talker Advertise 7 aus der anderen Richtung gewartet. Da der Ringknoten RIV die Information aber nur auf einen seiner beiden Ringports 3,4 weitergibt, kommt keine zweite Information beim Ringknoten über den zweiten Ringport 3, 4 an. Die zweite Information kommt dabei über den Ringknoten R1 und die passive Standby-Koppelstrecke 18 am Knoten RIII an. Dieser sendet die Information aktualisiert in beide Richtungen des Ringes 12. Da von RIV nur in eine Ringrichtung gesendet wird, und der Ringknoten mit der passiven Standby-Koppelstrecke 18 die Information erst mit dem Empfang einer zweiten Information weitergeben würde, wird ein Zurücksenden der Information vom zweiten Ringsegment 12 in das erste Ringsegment 11 anhand der lokalen Ring- und Standby-Information an den Ports verhindert, ohne dass dazu vorher eine Pfadberechnung notwendig ist.

Es gelten insbesondere folgende allgemeine Regeln:
Ein Koppel-Ringknoten RI-RIV, der einen Talker Advertise 7 über einen Ringport 3, 4 empfängt, gibt die Informationen aus dem Talker Advertise 7 zuerst nur über den anderen Ringport 3, 4 (nicht den Empfangsport) weiter.

Beim Empfang der Talker Advertise Information über einen Aktiv-Koppel-Port 19 wird die Nachricht nur an einen Ringport 3, 4 weitergegeben.

Beim Empfang der Talker Advertise Information über den Passiv-Koppel-Port 20 wird die Information erst weitergegeben, wenn schon eine Information, konkret ein Talker Advertise 7 über einen Ringport 3, 4 empfangen wurde - die empfangene Information wird falls notwendig aktualisiert und erneut verteilt.

Eine empfangene Information, also ein Talker Advertise wird nicht im Ringsegment 11, 12 weitergeleitet, wenn diese ursprünglich von einem Port vom Endgerät T oder dem Aktiv-Koppel-Port 19 kommt (Einspeiser-Rolle).

Die notwendige Kennzeichnung der Ports, insbesondere als Aktiv- bzw. Passiv-Koppel-Port 19, 20 ist durch die Konfiguration des Standby-Mechanismus in den Koppel-Ringknoten RI-RIV vorhanden und kann von dem erweiterten Reservierungsprotokoll, insbesondere SRP, verwendet werden. Was die Konfiguration des Standby-Mechanismus angeht, sei rein beispielhaft auf die auf die Anmelderin zurückgehende Veröffentlichung "Konfiguration von HRP-Ringen mit Standby-Kopplung" verwiesen, die unter https://support.industry.siemens.com/cs/document/109739600/ko nfiguration-von-hrp-ringen-mit-standby-kopplung?dti=0&lc=de-AT erhältlich ist.

Durch die Verwendung von IEEE 802.1 CB kann für Streams eine Seamless Redundanz realisiert werden. Dazu müssen die Endgeräte T einen Redundanz-Tag mit einer Sequenznummer in die Pakete eines Streams einfügen. Anhand der Sequenznummer im Tag werden Duplikate von CB-Knoten erkannt und können gefiltert werden.

Für die in Figur 9 dargestellte Netzwerktopologie kann, wenn die vier Koppel-Ringknoten und der Talker T und der Listener L CB unterstützen (siehe Figur 14, in welcher diese Komponenten durch fette Umrandungen hervorgehoben sind), Seamless Redundancy für die beiden Koppelstrecken 17, 18 realisiert werden, von denen dann keine in einem Standby-Modus ist, sondern über beide Strecken 17, 18 simultan Datenpakete übertragen werden.

Bei der Kopplung mit CB wird in den vier Koppel-Ringknoten RI-RIV (höchste Ausfallsicherheit) bei der Datenübertragung eine Filterung (bei R-RIV) und eine erneute Duplizierung der Stream Datenframes (bei RIII und RIV) vorgenommen.

Durch die vorhandene Trennung mit einem Ringmanager in jedem der beiden Ringsegmente 11, 12 erfolgt keine Weiterleitung von Duplikaten in den Ringsegmenten 11, 12. Erst durch die Koppelstellen mit CB werden Duplikate vom Ringsegment 11 zum Ringsegment 12 gesendet. Diese Duplikate müssen in den CB-Koppel-Ringknoten des Ringsegments 12 wieder entfernt werden, damit jeweils nur ein Duplikat in jede Ringrichtung übertragen wird. Dies ist in Figur 15 angedeutet, dort für den Fall, dass im ersten Ringsegment 11 der Ringknoten R2 die Rolle bzw. Funktion des Ringmanagers übernimmt und im zweiten Ringsegment 12 der Ringknoten R4. Die mögliche Datenweiterleitung ist in Figur 15 durch Pfeile angedeutet. Durch die Anmeldung des Listeners L wird die Stream-Übertragung auf ein Teilstück des jeweiligen möglichen Weges zwischen Talker T und Listener L begrenzt.

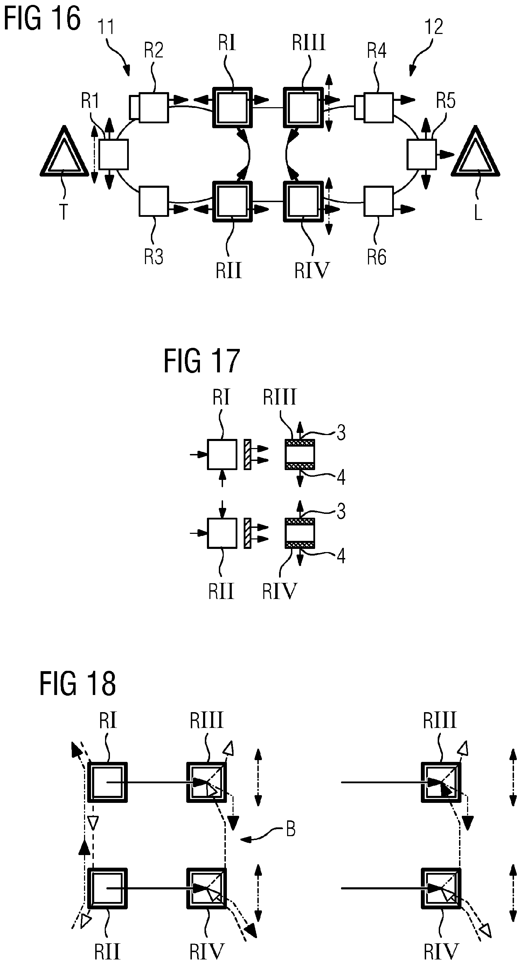

Die Figur 16 zeigt die lokale Weiterleiteinformation für die Weitergabe der Talker Advertise Information von Talker T, die jeweils durch Pfeile an den Knoten R1-R6, RI-RIV angedeutet ist. Die Datenübertragung erfolgt ohne Farben. Es ist keine synchronisierte Richtung notwendig.

Was die Verbreitung des Talker Advertise 7 bei CB-Kopplung angeht, gelten die gleichen Regeln wie vorstehend für die Ausführungsbeispiele ohne CB in der Kopplung beschrieben, wobei zusätzlich die Konfiguration einer Duplikate-Filterung in den betroffenen Koppel-Ringknoten RI-RIV erfolgt.

In der Figur 17 ist die Duplikate-Erkennung und die Duplikate-Filterung für das Szenario gemäß Figur 15 dargestellt. Eine Erkennung (in der Figur 17 durch einfach schraffierte Balken angedeutet) erfolgt in den Koppel-Ringknoten RI und RII und eine Filterung (durch doppelt schraffierte Balken angedeutet). In den Koppel-Ringknoten RIII und RIV werden Duplikate-Filter benötigt. Die Reservierung konfiguriert dabei an den Koppelstellen der Verbindung im zweiten Ringsegment 12 an den Koppel-Ringknoten RIII und RIV die Duplikate Filterung. Bei richtiger Funktion von MRP bzw. HRP kommt es im ersten Ringsegment 11 und den Koppel-Ringknoten RI und RII für den abgebildeten Stream nicht zu Duplikaten, da durch den Ringmanager R1, R4 jeweils nur ein Pfad aktiv ist. Da beide Koppel-strecken 17, 18 gleichzeitig genutzt werden, kommt es im zweiten Ringsegment 12 zwischen den beiden Knoten RIII und RIV zu einem Austausch von Duplikaten - jeweils eine Kopie läuft von dem Knoten RIII zu RIV und von RIV zu RIII.

Für den Fall, dass zumindest einige Ringknoten in einem Netzwerk CB unterstützen, insbesondere für den Fall, dass zwei oder mehr Koppel-Ringknoten RI-RIV, welche zwei Ringsegmente 11, 12 koppeln, CB unterstützen, können auch in der Dataplane zwei Kenner, insbesondere zwei Farben und/oder VIDs verwendet werden.

Bei einer Data-Plane mit zwei VIDs für die unterschiedlichen Kenner, insbesondere Farben in der Control-Plane ist eine "Drehrichtung" im (jeweiligen) Ringsegment für die Koppel-Ringknoten RI-RIV beim erneuten duplizieren vorteilhaft, damit die von den Koppel-Ringknoten RI-RIV empfangenen Daten ohne Änderung des Kenners weitergegeben werden können.

In der Figur 18 links ist - für die Konstellation gemäß Figur 14 - der Fall mit Drehrichtung und rechts der Fall ohne solche dargestellt. Die lokale Farbe für den jeweiligen Knoten RIII und RIV ist dabei neben dem jeweiligen Knoten dargestellt (erneut mit gestrichelter Linie für "Blau" und strichpunktierter Linie für "Rot"). Bei der linken Darstellung können die Koppel-Ringknoten RIII und RIV die empfangenen Daten vom Ringsegment filtern und unverändert weitergeben. In der rechten Abbildung ändert sich bei den von dem Ringsegment 12 zuerst empfangenen Duplikaten der Kenner bei der Weitergabe über den Ring.

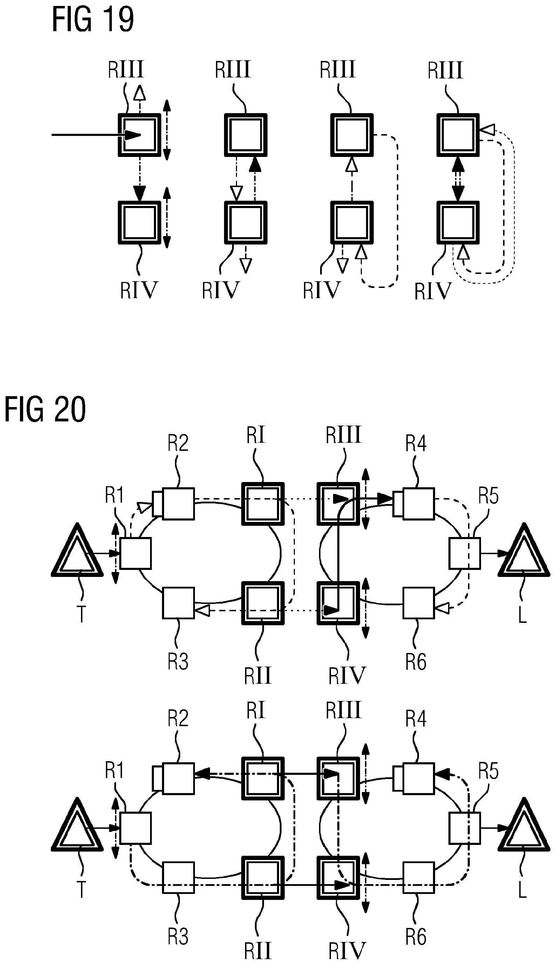

Bei der Data-Plane ohne Kenner, insbesondere ohne verschiedene "Farben" bzw. VIDs ist die Drehrichtung auf der Data-Plane nicht vorhanden. In der Figur 19 ist die lokale Änderung der Farbe für die Control-Plane in vier Schritten für die Koppel-Ringknoten RIII und RIV aus dem Szenario gemäß Figur 14 gezeigt. Dabei ändert sich der Kenner in der Control-Plane bei der Ausbreitung in einer Drehrichtung bei dem jeweiligen Koppel-Ringknoten RI-RIV. Für den Ring entstehen so Advertise Nachrichten mit dem gleichen Kenner aus beiden Drehrichtungen des Ringes.

Die Control-Plane muss dann in den CB unterstützenden Koppel-Ringknoten RI-RIV entsprechend erweitert werden, um die "Farbe" der Reservierungen zu beachten und ggf. bei dem Aussenden einer duplizierten Reservierung die lokal falsche Farbe lokal zu korrigieren und im Ringsegment 11, 12 verändert weiterzugeben. Die Ringknoten R1-R6 im Ringsegment 11, 12 selbst betrachten die Reservierung intern zweckmäßiger Weise mit der für den Port 3, 4 zugewiesenen Farbe, damit die Richtung intern erhalten bleibt und eine Reservierung für beide Richtungen erfolgt bzw. möglich wird.

Ohne Synchronisierung der Drehrichtung in den CB Koppel-Ringknoten RI-RIV kann eine Änderung der VID (Farbe) bei der Übertragung der Datenpakte/Datenframes für Streams (Re-taggen), die von einem Ringport 3, 4 empfangen wurden, notwendig werden. Da bei Ethernet der Source-Port bei der Datenübertragung nicht erneut verwendet wird, kann die Weiterleitung auf der Data-Plane mit einer VID aus beiden Richtungen problemlos funktionieren. Für die Diagnose ist jedoch nicht mehr einfach nachvollziehbar, welchen Weg ein Paket benutzt hat, weshalb die Verwendung von zwei Kennern, insbesondere Farben bzw. VIDs besonders vorteilhaft sein kann.

In der Figur 20 ist - erneut beispielhaft für das Szenario gemäß Figur 14 - die Datenübertragung mit zwei verschiedenen "Farben" bzw. VIDs skizziert. Eine Drehrichtung in den Koppel-Ringknoten RIII und RIV empfiehlt sich und ist, wie in den vorherigen Figuren, jeweils neben dem Knoten mit Pfeilen gekennzeichnet. In Figur 20 ist die Ausbreitung für beide Farben (erneut für "Blau" mit gestrichelter und "Rot" mit strichpunktierter Linie) getrennt dargestellt. Dabei ist die Weitergabe über die Koppelstrecken 17, 18 mit beiden Kennern bzw. mit einem neutralen Kenner (durchgezogene bzw. punktierte Linie) möglich. Der neutrale Kenner wird ebenfalls vom Talker T und zum Listener L verwendet. Es sei angemerkt, dass an sämtlichen Knoten weitere Listener anliegen könnten. Pfeile mit durchgezogener Linie repräsentieren dabei eine aktive Datenübertragung. Pfeile mit gestrichelter Linie, dass eine Reservierung existiert aber keine Datenübertragung stattfindet. Dies ist der Fall, wenn die Strecke durch den jeweiligen Ringmanager R2, R4 "unterbrochen" ist.

Bei zwei VIDs in der Data-Plane ist eine Synchronisierung im (jeweiligen) Ringsegment 11, 12 zwischen den CB-Koppel-Ringknoten RI-RIV sinnvoll um das Re-taggen in dem jeweils zweiten CB Koppel-Ringknoten RI-RIV zu vermeiden und eine einfachere Diagnose auf den Ringsegmenten 11, 12 zu ermöglichen.

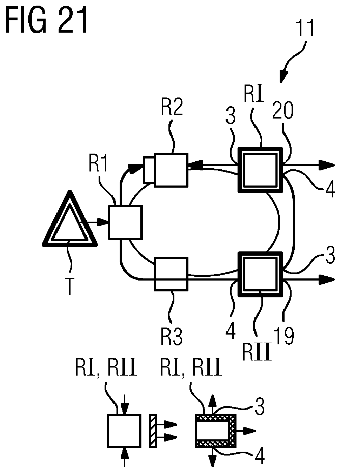

Es sei angemerkt, dass eine Konfiguration von CB optional auch als Rückspeiseschutz, bei dem Szenario gemäß Figur 14 insbesondere in den Koppel-Ringknoten RI und RII, vorgenommen werden kann. Dies ist in Figur 21 veranschaulicht, in welcher oben nochmals das Ringsegment 11 mit den Koppel-Ringknoten RI und RII dargestellt und unten die Duplikate-Erkennung und Duplikate-Filterung in Analogie zu Figur 17 für RI und RII wieder durch einfach und doppelt schraffierte Balken angedeutet ist. Durch die Filterung von Duplikaten mit CB bei der Weiterleitung im Ringsegment 11 kommt es bei einem im Fehlerfall "geschlossenen" (nicht "geöffneten") Ringsegment 11 nicht zu kreisenden Pakete, da die CB Koppel-Ringknoten RI und RII jeweils nur das erste Duplikat weiterleiten (Figur 21 unten links) und für das zweite Duplikat eine Unterbrechung darstellen. Somit wird ein Zurückschicken des Duplikats verhindert und ein Rückspeiseschutz gewährleistet.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur ausfallsicheren Datenübertragung in einem bevorzugt industriellen Netzwerk mit einem oder mehreren Ringsegmenten (2, 11, 12), in dem oder in denen jeweils mehrere Ringknoten (R1-R11, RI-RIV) unter Bildung eines Ringes miteinander verbunden sind, wobei jeder Ringknoten (R1-R11, RI-RIV) genau zwei an dem oder dem jeweiligen Ringsegment (2, 11, 12) teilnehmende und als solche bekannte Ringports (3, 4) und optional einen oder mehrere nicht an dem oder dem jeweiligen Ringsegment teilnehmende Ports (5) aufweist,
**dadurch gekennzeichnet, dass**
zur Einrichtung eines Streams zwischen einem Stream-Initiator (T) und wenigstens einem Stream-Teilnehmer (L) von dem Stream-Initiator (T) eine Ankündigungsnachricht (7) für den Stream herausgegeben und diese im Netzwerk verbreitet wird, und die Ankündigungsnachricht (7) das oder das jeweilige Ringsegment (2, 11, 12) an einem nicht an dem oder dem jeweiligen Ringsegment (2, 11, 12) teilnehmenden Port (5) eines den Einspeise-Ringknoten (R1, R4, RIV) des oder des jeweiligen Ringsegmentes (2, 11, 12) für diese Ankündigungsnachricht darstellenden Ringknotens (R1-R11, RI-RIV) erreicht, und der oder der jeweilige Einspeise-Ringknoten (R1, R4, RIV) die Ankündigungsnachricht (7) über wenigstens einen seiner beiden an dem oder dem jeweiligen Ringsegment (2, 11, 12) teilnehmenden Ringports (3, 4) weiterleitet, und die Ankündigungsnachricht (7) in dem oder dem jeweiligen Ringsegment (2, 11, 12) in wenigstens eine Richtung von Ringknoten (R1-R11, RI-RIV) zu Ringknoten (R1-R11, RI-RIV) weitergeleitet und bevorzugt von den Ringknoten (R1-R11, RI-RIV) verarbeitet wird, wobei für jeden oder von jedem Ringknoten (R1-R11, RI-RIV) des oder des jeweiligen Ringsegmentes (2, 11, 12), der eine Ankündigungsnachricht (7) an einem an dem oder dem jeweiligen Ringsegment (2, 11, 12) teilnehmenden Ringport (3, 4) empfängt, vor deren Weiterleitung über seinen anderen an dem oder dem jeweiligen Ringsegment (2, 11, 12) teilnehmenden Ringport (3, 4) überprüft wird, ob er der Einspeise-Ringknoten (R1, R4, RIV) des oder des jeweiligen Ringsegmentes (2, 11, 12) für diese Ankündigungsnachricht (7) war, und die Ankündigungsnachricht (7) nur über den anderen an dem oder dem jeweiligen Ringsegment (2, 11, 12) teilnehmenden Ringport (3, 4) weitergeleitet wird, wenn dies nicht der Fall ist.

2. Verfahren nach Anspruch 1,
**dadurch gekennzeichnet, dass**
die Überprüfung für den oder von dem jeweiligen Ringknoten (R1-R11, RI-RIV), ob er der oder der jeweilige Einspeise-Ringknoten (R1, R4, RIV) für die Ankündigungsnachricht (7) war, erfolgt, indem geprüft wird, ob der jeweilige Ringknoten (R1-R11, RI-RIV) die Ankündigungsnachricht (7) zuvor bereits über einen an dem oder dem jeweiligen Ringsegment (2, 11, 12) nicht teilnehmenden Port (5) empfangen hat.

3. Verfahren nach Anspruch 1 oder 2,
**dadurch gekennzeichnet, dass**
der oder der jeweilige Einspeise-Ringknoten (R1, R4, RIV) die an einem an dem oder dem jeweiligen Ringsegment (2, 11, 12) nicht teilnehmenden Port (5) empfangene Ankündigungsnachricht (7) über seine beiden an dem oder dem jeweiligen Ringsegment (2, 11, 12) teilnehmenden Ringports (3, 4) weiterleitet, wobei er sie vor deren Weiterleitung über den einen Ringport (3, 4) mit einem Kenner versieht und vor deren Weiterleitung über den anderen Ringport (3, 4) mit einem anderen, von dem einen Kenner verschiedenen Kenner versieht, wobei bevorzugt VLAN IDs und/oder Farben als Kenner verwendet werden.

4. Verfahren nach Anspruch 2 und 3,
**dadurch gekennzeichnet, dass**
die Überprüfung für den oder von dem jeweiligen Ringknoten (R1-R11, RI-RIV), ob er der oder der jeweilige Einspeise-Ringknoten (R1, R4, RIV) für die Ankündigungsnachricht (7) war, erfolgt, indem geprüft wird, ob der jeweilige Ringknoten (R1-R11, RI-RIV) die Ankündigungsnachricht (7) zuvor bereits ohne einen der beiden Kenner empfangen hat.

5. Verfahren nach einem der vorhergehenden Ansprüche,
**dadurch gekennzeichnet, dass**
jeder Ringknoten (R1-R11, RI-RIV) eine an einem Port (3, 4, 5, 19, 20) empfangene Ankündigungsnachricht (7) über sämtliche Ports (3, 4, 5, 19, 20) mit Ausnahme desjenigen Ports, an welchem er die Ankündigungsnachricht (7) empfangen hat, weiterleitet.

6. Verfahren nach einem der vorhergehenden Ansprüche,
**dadurch gekennzeichnet, dass**
die Ringknoten (R1-R11, RI-RIV) Ankündigungsnachrichten (7), die sie an ihrem einen an dem oder dem jeweiligen Ringsegment (2, 11, 12) teilnehmenden Ringport (3, 4) empfangen einen Kenner zuweisen und Ankündigungsnachrichten (7), die sie an ihrem anderen an dem oder dem jeweiligen Ringsegment (2, 11, 12) teilnehmenden Ringport (3, 4) empfangen einen von dem einen Kenner verschiedenen anderen Kenner zuweisen, und bevorzugt die Ringknoten (R1-R11, RI-RIV) empfangene Ankündigungsnachrichten (7) bzw. darin enthaltene Informationen zusammen mit dem jeweils zugewiesenen Kenner speichern und/oder weiterverarbeiten.

7. Verfahren nach einem der vorhergehenden Ansprüche,
**dadurch gekennzeichnet, dass**
die Information darüber, welche beiden Ports (3, 4) der Ringknoten (R1-R11, RI-RIV) an dem oder dem jeweiligen Ringsegment (2, 11, 12) teilnehmende Ringports (3, 4) sind, über ein Redundanzprotokoll, insbesondere MRP und/oder HRP, bereitgestellt und/oder erhalten wird.

8. Verfahren nach einem der vorhergehenden Ansprüche,
**dadurch gekennzeichnet, dass**
für die Reservierung von Ressourcen an den Ringknoten (R1-R11, RI-RIV) ein Reservierungsprotokoll verwendet wird, wobei insbesondere in der Control-Plane des Reservierungsprotokolls eine logische Dataplane angenommen wird.

9. Verfahren nach einem der vorhergehenden Ansprüche,
**dadurch gekennzeichnet, dass**
für den Fall, dass ein Ringknoten (R1-R11, RI-RIV) eine bereits an einem an dem oder dem jeweiligen Ringsegment (2, 11, 12) teilnehmenden Ringport (3, 4) empfangene Ankündigungsnachricht (7) nochmals an dem anderen an dem oder dem jeweiligen Ringsegment (2, 11, 12) teilnehmenden Ringport (3, 4) empfängt, eine Aktualisierung der Ankündigungsnachricht (7) erfolgt, insbesondere, was eine mit der Ankündigungsnachricht (7) beschriebene bzw. angegebene maximale Latenz angeht.

10. Verfahren nach einem der vorhergehenden Ansprüche,
**dadurch gekennzeichnet, dass**
das Netzwerk zwei oder mehr miteinander gekoppelte Ringsegmente (2, 11, 12) umfasst.

11. Verfahren nach Anspruch 10,
**dadurch gekennzeichnet, dass**
die zwei oder jeweils zwei gekoppelten Ringsegmente (11, 12) über einen an den oder den jeweils zwei Ringsegmenten (11, 12) teilnehmenden Koppel-Ringknoten (R4) miteinander gekoppelt sind, wobei der Koppel-Ringknoten (R4) zwei an dem oder dem jeweils ersten Ringsegment(11) teilnehmende erste Ringports (13, 14), die nicht an dem zweiten Ringsegment (12) teilnehmen, und zwei an dem oder dem jeweils zweiten Ringsegment (12) teilnehmende zweite Ringports (15, 16), die nicht an dem ersten Ringsegment (11) teilnehmen, und optional weitere, weder an dem oder dem jeweils ersten (11) noch an dem oder dem jeweils zweiten Ringsegment (12) teilnehmende Ports aufweist, und der Koppel-Ringknoten (R4) den Einspeise-Ringknoten für das oder das jeweils zweite Ringsegment bildet und insbesondere Ankündigungsnachrichten, die er an einem der beiden ersten Ringports (3, 4) empfängt, sowohl über den anderen der beiden ersten Ringports (13, 14) als auch über die beiden zweiten Ringports (15, 16) weiterleitet.

12. Verfahren nach Anspruch 10,
**dadurch gekennzeichnet, dass**
die zwei oder jeweils zwei Ringsegmente (2, 11, 12) über zwei, drei oder vier Koppel-Ringknoten (RI-RIV) miteinander gekoppelt sind, die jeweils zwei Ringports (3, 4) aufweisen, die an einem der oder der jeweils zwei Ringsegmente (2, 11, 12) teilnehmen, wobei die Koppel-Ringknoten (RI-RIV) über zwei Koppelstrecken (17, 18) miteinander verbunden sind, wobei jede Koppelstrecke (17, 18) einen an keinem der oder der jeweils zwei Ringsegmente (2, 11, 12) teilnehmenden Koppel-Port (19, 20) des einen Koppel-Ringknotens (RI-RIV) mit einem an keinem der oder der jeweils zwei Ringsegmente (2, 11, 12) teilnehmenden Koppel-Port (19, 20) des anderen Koppel-Ringknotens (RI-RIV) verbindet.

13. Verfahren nach Anspruch 12,
**dadurch gekennzeichnet, dass**
eine Koppelstrecke eine aktive Koppelstrecke (17) und die andere Koppelstrecke eine passive Koppelstrecke (18) darstellt, wobei die aktive Koppelstrecke (17) zwei Aktiv-Koppel-Ports (19) und die passive Koppelstrecke (18) zwei Passiv-Koppel-Ports (20) verbindet, und bevorzugt ein Koppel-Ringknoten (RI-RIV), wenn er eine Ankündigungsnachricht (7) für einen Stream erstmalig an einem Ringport (3, 4) empfängt, über seinen anderen Ringport (3, 4) nicht jedoch über seinen Aktiv-Koppel-Port (19) oder seinen Passiv-Koppel-Port (20) weiterleitet, und insbesondere, wenn er eine zuvor bereits ein erstes Mal an einem Ringport (3, 4) empfangene Ankündigungsnachricht (7) für einen Stream ein zweites Mal an seinem anderen Ringport (3, 4) empfängt, die Ankündigungsnachricht (7) über den einen Ringport (3, 4) und über seinen Aktiv- oder Passiv-Koppel-Port (19, 20) weiterleitet.

14. Verfahren nach Anspruch 13,
**dadurch gekennzeichnet, dass**
ein Koppel-Ringknoten (RI-RIV), der eine Ankündigungsnachricht (7) für einen Stream an einem Aktiv-Koppel-Port (19) empfängt, die Ankündigungsnachricht (7) nur über einen seiner beiden Ringports (3, 4) weiterleitet, und/oder ein Koppel-Ringknoten RI- RIV), der eine Ankündigungsnachricht (7) für einen Stream an einem Passiv-Koppel-Port (20) empfängt, die Ankündigungsnachricht (7) über keinen seiner beiden Ringports (3, 4) weiterleitet und diese zwischenspeichert.

15. Verfahren nach einem der Ansprüche 11 bis 14,
**dadurch gekennzeichnet, dass**
die Koppel-Ringknoten (RI-RIV) Stream-Datenpakete duplizieren und/oder duplizierte Stream-Datenpakete herausfiltern können, insbesondere Seamless Redundancy, bevorzugt gemäß IEEE 802.1 CB unterstützen.

16. Verfahren nach Anspruch 15,
**dadurch gekennzeichnet, dass**
der Stream-Initiator (T) und der wenigstens eine Streamteilnehmer (L) Redundanz-Tags in Stream-Datenpakete einfügen und/oder aus Stream-Datenpaketen entfernen können, insbesondere Seamless Redundancy, bevorzugt gemäß IEEE 802.1 CB unterstützen.

17. Verfahren nach einem der vorhergehenden Ansprüche,
**dadurch gekennzeichnet, dass**
im Anschluss an die Einrichtung des Streams Datenpakete von dem Stream-Initiator (T) an den wenigstens einen Stream-Teilnehmer (L) oder von dem wenigstens einen Streamteilnehmer (L) an den Stream-Initiator (T) unter Nutzung von an Ringknoten (R1-R11, RI-RIV) reservierten Ressourcen übertragen werden,
wobei die Datenpakete von demjenigen Ringknoten (R1-R11, RI-RIV), über den sie das oder das jeweilige Ringsegment (2, 11, 12) erreichen, dupliziert und in beide Richtungen des oder des jeweiligen Ringsegmentes (2, 11, 12) weitergeleitet werden,
wobei ein Ringmanager (R2, R4) des oder des jeweiligen Ringsegmentes (2, 11, 12), der insbesondere von einem der Ringknoten (R1-R11, RI-RIV) des oder des jeweiligen Ringsegmentes (2, 11, 12), bevorzugt von einem an allen Ringsegmenten (2, 11, 12) teilnehmenden Ringknoten (R1-R11, RI-RIV) gebildet wird oder umfasst ist, die Weiterleitung von Datenpaketen an einer Stelle in dem oder dem jeweiligen Ringsegment (2, 11, 12) unterbindet, um zu verhindern, dass Duplikate der Datenpakete zu dem Empfänger gelangen.

18. Netzwerkknoten (R1-R11, RI-RIV), der zur Durchführung des Verfahrens nach einem der vorhergehenden Ansprüche ausgebildet und/oder eingerichtet ist, wobei der Netzwerkknoten (R1-R11, RI-RIV) insbesondere drei oder mehr Ports (3, 4, 5, 19, 20) aufweist und dazu ausgebildet und/oder eingerichtet ist, zu ermitteln oder mitgeteilt zu bekommen, welche seiner Ports (3, 4, 5) an einem gegebenen Ringsegment (2, 11, 12) teilnehmen und Ringports (3, 4) dieses Ringsegmentes (2, 11, 12) bilden, und welcher oder welche weiteren seiner Ports (5) an dem gegebenen Ringsegment (2, 11, 12) nicht teilnehmende Ports (5) bilden, und um zu überprüfen, ob er eine Ankündigungsnachricht (7), die er an einem Ringport (3, 4) empfängt, zuvor bereits an einem nicht an dem gegebenen Ringsegment teilnehmenden Oort (5) empfangen hat, und insbesondere die empfangene Ankündigungsnachricht (7) nur für den Fall über seinen anderen Ringport (3, 4) weiterzuleiten, dass er die Ankündigungsnachricht (7) zuvor nicht bereits über einen nicht an dem gegebenen Ringsegment (2, 11, 12) teilnehmenden Port (5) empfangen hat.

19. Computerprogramm umfassend Programmcode-Mittel zur Durchführung des Verfahrens nach einem der Ansprüche 1 bis 17.

20. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 17 durchzuführen.
